(19) Europäisches Patentamt / European Patent Office / Office européen des brevets

(11) **EP 4 489 324 A1**

(12) **EUROPEAN PATENT APPLICATION**
published in accordance with Art. 153(4) EPC

(43) Date of publication:
**08.01.2025 Bulletin 2025/02**

(21) Application number: 23773917.2

(22) Date of filing: **22.03.2023**

(51) International Patent Classification (IPC):
*H04B 7/06* (2006.01)    *H04B 7/08* (2006.01)
*H04B 7/0408* (2017.01)    *H04L 5/00* (2006.01)

(52) Cooperative Patent Classification (CPC):
**H04B 7/0408; H04B 7/06; H04B 7/08; H04L 5/00**

(86) International application number:
**PCT/CN2023/083086**

(87) International publication number:
**WO 2023/179670 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 24.03.2022  CN 202210303709
08.07.2022  CN 202210806902

(71) Applicant: **Huawei Technologies Co., Ltd.**
**Shenzhen, Guangdong 518129 (CN)**

(72) Inventors:
• JIAO, Ruicheng
  Shenzhen, Guangdong 518129 (CN)
• HE, Hongli
  Shenzhen, Guangdong 518129 (CN)
• LI, Xueru
  Shenzhen, Guangdong 518129 (CN)

(74) Representative: **Maiwald GmbH**
**Engineering**
**Elisenhof**
**Elisenstrasse 3**
**80335 München (DE)**

(54) **SIGNAL PROCESSING METHOD AND COMMUNICATION APPARATUS**

(57)    This application provides a signal processing method and a communication apparatus. In the method, a first device may determine P resource elements in L resource elements from resource elements corresponding to a first time domain symbol. The P resource elements are for mapping a first reference signal to be sent to a second device. No signal is sent on a resource element other than the P resource elements in the L resource elements. A quantity of resource elements between any two of the L resource elements is an integer multiple of M.

The first reference signal received by the second device at a specific sampling point is not interfered with by a signal mapped on a resource element other than the L resource elements in the resource elements corresponding to the first time domain symbol. The second device may measure energy of different sampling points of the first reference signal in time domain, to measure different beams. This can improve beam measurement accuracy, and train a plurality of beams on one time domain symbol, to reduce resource overheads.

500

A network device determines P REs in L REs, where a quantity of REs between any two of the L REs is an integer multiple of M, the L REs are located in a frequency domain resource corresponding to a first time domain symbol, the L REs span frequency domain resources of at least two devices, and the P REs belong to a frequency domain resource of a first terminal device, where M, L, and P are positive integers, and L is greater than or equal to P — S510

The network device maps, on the P REs, a first reference signal to be sent to the first terminal device, where an RE other than the P REs in the L REs belongs to a frequency domain resource of another terminal device, no signal is sent on the RE other than the P REs in the L REs, and the at least two devices include the first terminal device and the another terminal device — S520

FIG. 5

## Description

This application claims priorities to Chinese Patent Application No. 202210303709.3, filed with the China National Intellectual Property Administration on March 24, 2022 and entitled "BEAM TRAINING METHOD", and to Chinese Patent Application No. 202210806902.9, filed with the China National Intellectual Property Administration on July 8, 2022 and entitled "SIGNAL PROCESSING METHOD AND COMMUNICATION APPARATUS", both of which are incorporated herein by reference in their entireties.

## TECHNICAL FIELD

This application relates to the communication field, and more specifically, to a signal processing method and a communication apparatus in the communication field.

## BACKGROUND

In a communication process, to overcome a path loss in communication, two devices may communicate a signal by using a directional beam. Before communicating a signal, the two devices need to perform beam training. In a conventional beam training method, only one beam can be trained on one time domain symbol, and when a large quantity of beams need to be trained, more time domain resources are occupied for the beam training. Consequently, overheads of the beam training are high.

## SUMMARY

Embodiments of this application provide a signal processing method and a communication apparatus, to reduce beam training overheads.

According to a first aspect, a signal processing method is provided. The method is applicable to a first device, and includes: determining P resource elements in L resource elements, where a quantity of resource elements between any two of the L resource elements is an integer multiple of M, the L resource elements are located in a frequency domain resource corresponding to a first time domain symbol, the L resource elements span frequency domain resources of at least two devices, and the P resource elements belong to a frequency domain resource of a second device; and

mapping, on the P resource elements, a first reference signal to be sent to the second device, where a resource element other than the P resource elements in the L resource elements belongs to a frequency domain resource of another device, no signal is sent on the resource element other than the P resource elements in the L resource elements, and the at least two devices include the second device and the another device, where M, L, and P are positive integers, and L is greater than or equal to P.

According to the foregoing solution, the first device may determine the P resource elements in the L resource elements from resource elements corresponding to the first time domain symbol, and map, on the P resource elements, the first reference signal to be sent to the second device. No signal is sent on the resource element other than the P resource elements in the L resource elements. The quantity of resource elements between any two of the L resource elements is an integer multiple of M. In this way, the first reference signal sent by the first device has a comb-like structure. In this case, the first reference signal received by the second device at a specific sampling point is not interfered with by a signal mapped on a resource element other than the L resource elements in the resource elements corresponding to the first time domain symbol. The second device may measure energy of the first reference signal at different sampling points on the first time domain symbol, to measure different beams. This can improve beam measurement accuracy, and can train a plurality of beams on one time domain symbol, to reduce resource overheads.

Optionally, the first device may be a network device, the second device is a first terminal device, and the at least two devices may be at least two terminal devices.

Optionally, the first device is a third terminal device, the second device is a fourth terminal device, and the at least two devices may be at least two terminal devices.

Optionally, the first time domain symbol may be a first orthogonal frequency division multiplexing (orthogonal frequency division multiplexing, OFDM) symbol.

Optionally, that the P REs belongs to a frequency domain resource of a second device may be understood as that the frequency domain resource of the second device includes the PREs, the P REs are located on a frequency band of the second device, or a frequency band of the second device includes the PREs.

Optionally, that no signal is sent on the RE other than the P REs in the L REs may be understood as that the first device maps no signal on the RE other than the P REs in the L REs, or the first device maps a signal on the RE other than the P REs in the L REs, but performs punctuation (punctuation) processing on the RE other than the P REs in the L REs. Optionally, the RE other than the P REs in the L REs may also be referred to as a blank RE.

Optionally, the P REs in the frequency domain resource of the second device are for mapping the first reference signal. The first device maps no signal on an RE other than the P REs in the frequency domain resource of the second device.

In some possible implementations, the method further includes: sending M*L sampling points corresponding to M time domain periodicities of the first reference signal to the second device on the first time domain symbol. Each of the M time domain periodicities of the first reference signal corresponds to L sampling points, $i^{th}$ sampling points in the M*L sampling points corresponding to the M time domain periodicities of the first reference signal have a quasi-colocation relationship. A value of i ranges between a part of positive integers of 1 to L. The first device further sends a first signal to a third device. The M time domain periodicities of the first signal correspond to M*L sampling points. Each of the M time domain periodicities of the first signal corresponds to L sampling points. The another device includes the third device.

A sequence of the $i^{th}$ sampling points in the M*L sampling points corresponding to the M time domain periodicities of the first reference signal is orthogonal to a sequence of $i^{th}$ sampling points in the M*L sampling points corresponding to the M time domain periodicities of the first signal.

M and L are positive integers.

According to the foregoing solution, the M*L sampling points corresponding to the M time domain periodicities of the first reference signal may be sent on the first time domain symbol. The $i^{th}$ sampling points in the M*L sampling points corresponding to the M time domain periodicities of the first reference signal have the quasi-colocation relationship. In other words, the $i^{th}$ sampling points in the M*L sampling points corresponding to the M time domain periodicities have a same spatial domain filtering parameter. In other words, transmit/receive beams of the $i^{th}$ sampling points in the M*L sampling points corresponding to the M time domain periodicities of the first reference signal are the same. In addition, the sequence of the $i^{th}$ sampling points in the M*L sampling points corresponding to the M time domain periodicities of the first reference signal is orthogonal to the sequence of the $i^{th}$ sampling points in the M*L sampling points corresponding to the M time domain periodicities of the first signal. If only these sampling points are investigated, the first reference signal sent by the first device to the second device, and the first signal sent by the first device to the third device do not interfere with each other, so that energy that is of the first reference signal and that is obtained by the second device through measurement does not include energy of the first signal. In this way, the energy that is of the first reference signal and that is measured by the second device can be accurate, to improve beam training accuracy.

Optionally, that $i^{th}$ sampling points in the M*L sampling points corresponding to the M time domain periodicities of the first reference signal have a quasi-colocation relationship may be: A part of the M*L sampling points in the M time domain periodicities have a quasi-colocation relationship, another part of the M*L sampling points in the M time domain periodicities have a quasi-colocation relationship, still another part of the M*L sampling points in the M time domain periodicities have a quasi-colocation relationship, and so on. There may be H quasi-colocation relationships in total, where H is a positive integer. Time corresponding to a sampling point that is in the L sampling points corresponding to each time domain periodicity and that does not have the quasi-colocation relationship may be understood as time required for beam switching. For example, time of a sampling point corresponding to a value that is not taken by i and that ranges from 1 to L is time required for beam switching, for example, may be time required by the first device to switch a transmission beam or time required by the second device to switch a receive beam.

Optionally, behavior of switching, by the first device in each time domain periodicity, the transmission beam to send a sampling point is the same. In other words, the behavior of switching, by the first device, the beam when sending the first reference signal is periodic.

Optionally, that $i^{th}$ sampling points in the M*L sampling points corresponding to the M time domain periodicities of the first reference signal have a quasi-colocation relationship may be understood as that spatial domain filtering parameters of the $i^{th}$ sampling points in the M*L sampling points corresponding to the M time domain periodicities of the first reference signal are the same, the transmit/receive beams of the $i^{th}$ sampling points in the M*L sampling points corresponding to the M time domain periodicities of the first reference signal are the same, or the $i^{th}$ sampling points in the M*L sampling points corresponding to the M time domain periodicities of the first reference signal pass through a same transmission channel.

In some possible implementations, the $i^{th}$ sampling point and a $j^{th}$ sampling point in the L sampling points corresponding to each time domain periodicity of the first reference signal have a quasi-colocation relationship. A value of j ranges between a part of positive integers of 1 to L, and i is different from j. In other words, a plurality of sampling points having the quasi-colocation relationship may include sampling points in a same periodicity, or may include sampling points in different periodicities. In some possible implementations, configuration information includes L bits. The L bits included in the configuration information are in one-to-one correspondence with the L sampling points corresponding to each time domain periodicity of the first reference signal. When a value of each of Q bits that are in the L bits included in the configuration information is a first value, it indicates that the second device measures Q sampling points that are in each time domain periodicity of the first reference signal and that are in one-to-one correspondence with the Q bits. When a value of each of (L-Q) bits other than the Q bits in the L bits included in the configuration information is a second value, it indicates that the second device does not measure (L-Q) sampling points that are in each time domain periodicity of the first reference signal and that are in one-to-one correspondence with the (L-Q) bits.

Time corresponding to the (L-Q) sampling points that are in each time domain periodicity of the first reference signal, that are in the one-to-one correspondence with the (L-Q) bits, and that are not measured by the second device may be understood as time for the first device to switch a beam.

According to the foregoing solution, the first device may indicate, in a bitmap manner, the second device to measure which sampling points in each time domain periodicity of the first reference signal. In addition, the second device has consistent measurement behavior in each time domain periodicity.

Optionally, when a value of each of several consecutive bits in the Q bits is the first value, it indicates that sampling points that are in each time domain periodicity and that correspond to the several bits have the quasi-colocation relationship.

In some possible implementations, the method further includes: receiving first measurement information corresponding to the first time domain symbol from the second device. The first measurement information includes L bits. The L bits included in the first measurement information are in one-to-one correspondence with the L sampling points corresponding to each time domain periodicity of the first reference signal. When a value of a first bit in the L bits included in the first measurement information is a third value, it indicates that a sum of energy of sampling points that are in the M time domain periodicities of the first reference signal and that meet a quasi-colocation relationship with a sampling point corresponding to the first bit is greater than a preset value. When a value of a second bit in the L bits is a fourth value, it indicates that a sum of energy of sampling points that are in the M time domain periodicities of the first reference signal and that meet a quasi-colocation relationship with a sampling point corresponding to the second bit is less than or equal to the preset value, or indicates that the second device does not measure a sampling point that is in each time domain periodicity of the first reference signal and that corresponds to the second bit. Time corresponding to the sampling point that is not measured is time for beam switching. Therefore, it is unnecessary to perform measurement.

Optionally, a quantity Q of bits that are in the configuration information and that are each with a value of the first value is greater than or equal to a quantity of bits that are in the first measurement information and that are each with a value of the third value.

Optionally, the sampling points that meet the quasi-colocation relationship with the sampling point corresponding to the first bit includes a sampling point in a same time domain periodicity, and may further include sampling points in different time domain periodicities. The second device needs to measure all sampling points that meet the quasi-colocation relationship, to determine a sum of energy of the sampling points, to measure a beam.

Optionally, a quasi-colocation relationship corresponds to a same pair of a receive beam and a transmission beam. Different quasi-colocation relationships correspond to different pairs of receive beams and transmission beams.

Optionally, the sampling points that meet the quasi-colocation relationship with the sampling point corresponding to the second bit may include a sampling point in a same time domain periodicity, or may include sampling points in different time domain periodicities. The second device needs to measure all sampling points that meet the quasi-colocation relationship, to determine a sum of energy of the sampling points, to measure the beam.

Optionally, the first measurement information may be information obtained by the second device through measurement on the first time domain symbol. Therefore, the first device may receive, from the second device, the first measurement information and indication information indicating the first time domain symbol. In this way, the first device may determine, based on the indication information, that the first measurement information is measurement information on the first time domain symbol. Optionally, the indication information may directly indicate the first time domain symbol, or may indicate the first time domain symbol by indicating a resource index of the first reference signal.

In some possible implementations, the configuration information includes Q indexes. The Q indexes are in one-to-one correspondence with the Q sampling points.

According to the foregoing solution, the second device determines the Q sampling points based on the Q indexes, and measures the Q sampling points in each time domain periodicity of the first reference signal. In addition, measurement behavior in each time domain periodicity is consistent.

Optionally, the Q indexes may be numbers ranging from 1 to L, may be numbers ranging from 0 to (L-1), or may be other numbers. This is not limited in this embodiment of this application.

In some possible implementations, the method further includes: receiving second measurement information corresponding to the first time domain symbol from the second device. The second measurement information indicates a target index. The Q indexes include the target index. A sum of energy of sampling points that are in each time domain periodicity and that meet a quasi-colocation relationship with a sampling point corresponding to the target index is greater than a preset value.

Optionally, there may be one or more target indexes. Optionally, the second measurement information may directly or indirectly indicate the target index.

Optionally, the second measurement information may be information obtained by the second device through measurement on the first time domain symbol. Therefore, the first device may receive, from the second device, the second measurement information and indication information indicating the first time domain symbol. In this way, the first device may determine, based on the indication information, that the second measurement information is measurement information on the first time domain symbol. Optionally, the indication information may directly indicate the first time domain symbol, or may indicate the first time domain symbol by indicating a resource index of the first reference signal.

In some possible implementations, the method further includes: receiving third measurement information corresponding to the first time domain symbol from the second device. The third measurement information includes a sum of energy of sampling points that are in each time domain periodicity of the first reference signal and that meet a quasi-colocation relationship.

Optionally, if there are H quasi-colocation relationships in total, the third measurement information may include H energy sums obtained based on sampling points in the H quasi-colocation relationships. In other words, one quasi-colocation relationship corresponds to one energy sum. Optionally, if there are H quasi-colocation relationships in total, the third measurement information may include F energy sums obtained based on sampling points in the F quasi-colocation relationships. Specifically, one quasi-colocation relationship corresponds to one energy sum. The F energy sums are energy sums that are in the H energy sums and that are greater than a preset value. F is a positive integer less than or equal to H. In other words, the second device may directly report a sum that is of energy of sampling points in each quasi-colocation relationship and that is obtained through measurement, or report a sum that is of energy of sampling points in the F quasi-colocation relationships and that is greater than the preset value.

Optionally, F bit locations in the third measurement information are in one-to-one correspondence with the F energy sums obtained based on the sampling points in the F quasi-colocation relationships. After obtaining the F energy sums by measuring the sampling points in the F quasi-colocation relationships, the second device includes the F energy sums in the F bit locations in the third measurement information respectively. The F bit locations are in one-to-one correspondence with the F quasi-colocation relationships. After receiving the third measurement information, the first device determines, based on the F bit locations, the F energy sums that are in one-to-one correspondence with the F quasi-colocation relationships, to determine a maximum energy sum in the F energy sums. A beam for sending a group of sampling points corresponding to the maximum energy sum is a first target beam.

Optionally, H bit locations in the third measurement information are in one-to-one correspondence with the H energy sums. The H energy sums are respectively carried in the H bit locations in the third measurement information. The H bit locations are in one-to-one correspondence with the H quasi-colocation relationships. After receiving the third measurement information, the first device determines, based on the H bit locations, the H energy sums that are in one-to-one correspondence with the H quasi-colocation relationships, to determine a maximum energy sum in the H energy sums. A beam for sending a group of sampling points corresponding to the maximum energy sum is a first target beam.

Optionally, the sum of the energy of the sampling points in this embodiment of this application may be a sum of normalized energy of sampling points.

Optionally, the third measurement information may be information obtained by the second device through measurement on the first time domain symbol. Therefore, the first device may receive, from the second device, the third measurement information and indication information indicating the first time domain symbol. In this way, the first device may determine, based on the indication information, that the third measurement information is measurement information on the first time domain symbol. Optionally, the indication information may directly indicate the first time domain symbol, or may indicate the first time domain symbol by indicating a resource index of the first reference signal.

In some possible implementations, the method further includes: sending first indication information to the second device. The first indication information indicates that the $i^{th}$ sampling points in the M*L sampling points corresponding to the M time domain periodicities of the first reference signal sent on the first time domain symbol have the quasi-colocation relationship.

Optionally, the first device may send the first indication information to the second device by using DCI, a MAC CE, or radio resource control RRC signaling.

In some possible implementations, the method further includes: sending second indication information to the second device. The second indication information indicates the first time domain symbol.

Optionally, the second indication information may directly indicate the first time domain symbol. Specifically, the second indication information indicates a frame index of a frame in which the first time domain symbol is located, a slot index of a slot in the frame in which the first time domain symbol is located, and a symbol index of a symbol in a slot in which the first time domain symbol is located. Optionally, the second indication information specifically indicates a slot offset of the slot in which the first time domain symbol is located relative to a slot in which the first device sends the second indication information, and the symbol index of a symbol in the slot in which the first time domain symbol is located.

Optionally, the second indication information may indicate the first time domain symbol by indicating the resource index of the first reference signal.

Optionally, if the first device is a network device, the first device may send the second indication information to the second device by using downlink control information (downlink control information, DCI), a medium access control (medium access control, MAC) control element (control element, CE), or radio resource control (Radio Resource Control, RRC) signaling. Optionally, if the first device is a third terminal device, the first device may send the second indication information by using SCI 2, a MAC CE, or RRC signaling.

In some possible implementations, third indication information is sent. The third indication information indicates the first time domain symbol.

Optionally, the third indication information specifically indicates a frame index of a frame in which the first time domain symbol is located, a slot index of a slot in the frame in which the first time domain symbol is located, and a symbol index of a symbol in a slot in which the first time domain symbol is located. Optionally, the third indication information specifically indicates a slot offset of the slot in which the first time domain symbol is located relative to a slot in which the first device sends the third indication information, and the symbol index of a symbol in the slot in which the first time domain symbol is located.

Optionally, sending the third indication information includes: sending the third indication information to the third device, or broadcasting the third indication information.

Optionally, when the first device is a network device, and the third device is a second terminal device, the sending the third indication information to the third device includes: The network device sends the third indication information to the second terminal device by using DCI, a MAC CE, or RRC signaling. When the first device is a third terminal device, and the third device is a fourth terminal device, sending the third indication information to the third device includes: The third terminal device sends the third indication information to the fourth terminal device by using SCI 2, a MAC CE, or RRC signaling.

Optionally, when the first device is a third terminal device, and the third device is a fourth terminal device, broadcasting the third indication information includes: The third terminal device may broadcast the third indication information by using SCI 2, a MAC CE, or RRC signaling in a broadcast message.

In some possible implementations, the method further includes: sending fourth indication information. The fourth indication information indicates a first comb value M and a first comb offset value that correspond to the L resource elements. The first comb offset value ranges from 0 to (M-1).

Optionally, sending the fourth indication information includes: sending the fourth indication information to the third device, or broadcasting the fourth indication information.

Optionally, when the first device is a network device, and the third device is a second terminal device, the sending the fourth indication information to the third device includes: The network device sends the fourth indication information to the second terminal device by using DCI, a MAC CE, or RRC signaling. When the first device is a third terminal device, and the third device is a fourth terminal device, the third terminal device sends the fourth indication information to the fourth terminal device by using SCI 2, a MAC CE, or RRC signaling.

Optionally, when the first device is a third terminal device, and the third device is a fourth terminal device, broadcasting the fourth indication information includes: The third terminal device may broadcast the fourth indication information by using SCI 2, a MAC CE, or RRC signaling in a broadcast message.

In some possible implementations, the method further includes: sending fifth indication information to the third device. The fifth indication information indicates that no signal is mapped on the resource element other than the P resource elements in the L resource elements or that punctuation is performed on the resource element other than the P resource elements in the L resource elements.

In some possible implementations, the method further includes: receiving sixth indication information broadcast by a fourth device, where the sixth indication information indicates the first time domain symbol; and receiving seventh indication information broadcast by the fourth device, where the seventh indication information indicates the fourth device to send, on the first time domain symbol, a second comb value K and a second comb offset value that correspond to a resource element of a second reference signal, K is a positive integer, and the second comb offset value ranges from 0 to (K-1).

In some possible implementations, the method further includes: determining W resource elements based on the first time domain symbol indicated by the sixth indication information and the second comb value K and the second comb offset value that are indicated by the seventh indication information. The W resource elements span the frequency domain resources of the at least two devices, and a quantity of resource elements between any two of the W resource elements is an integer multiple of K, where W is a positive integer. The determining P resource elements in L resource elements includes: filtering out, from a frequency domain resource of the first device, a resource element that belongs to the W resource elements, to determine the P resource elements in the L resource elements.

In some possible implementations, the method further includes: determining W resource elements based on the first time domain symbol indicated by the sixth indication information and the second comb value K and the second comb offset value that are indicated by the seventh indication information, where the W resource elements span the frequency domain resources of the at least two devices, and a quantity of resource elements between any two of the W resource elements is an integer multiple of K, where W is a positive integer; and filtering out, from a frequency domain resource of the first device, a resource element that belongs to the W resource elements, to determine a resource element for the first device to send another signal.

According to a second aspect, a signal processing method is provided. The method is applicable to a second device, and includes: receiving M*L sampling points corresponding to M time domain periodicities of a second signal on a first time domain symbol, where each of the M time domain periodicities of the second signal corresponds to L sampling points; and determining energy of a first reference signal in the second signal based on an inner product of a first sequence and a second sequence, where the first sequence includes a sequence of $i^{th}$ sampling points in the M*L sampling points corresponding to the M time domain periodicities of the second signal, and the second sequence includes a sequence of $i^{th}$ sampling points in M*L sampling points in M time domain periodicities of the local first reference signal, where M and L are positive integers, and a value of i ranges between a part of positive integers of 1 to L.

According to the foregoing solution, in a process in which the second device determines the energy of the first reference signal in the second signal, the second device can learn of the first reference signal sent by a first device. In other words, the second device locally stores the first reference signal. After the second device receives the second signal, in a process in which the second device performs an inner product by using a sequence of the $i^{th}$ sampling points in the M time domain periodicities of the second signal and a sequence of the $i^{th}$ sampling points in the M time domain periodicity of the locally stored first reference signal, interference of another signal (a signal mapped on a resource element other than L resource elements that corresponds to the first time domain symbol) on the first reference signal can be canceled, so that the energy that is of the first reference signal and that is determined by the second device can be accurate.

Optionally, the second signal includes the first reference signal to be sent to the second device and a first signal to be sent to a third device. Alternatively, the second signal consists of the first reference signal to be sent to the second device and the first signal to be sent to the third device. In other words, the second device may receive both the first reference signal to be sent to the second device and the first signal to be sent to the third device. From a perspective of the second device, it is referred to as that the second device receives the second signal on the first time domain symbol. However, the second device cannot sense that the received second signal is a combination of the first reference signal and the first signal. In the process in which the second device performs an inner product by using the sequence of the $i^{th}$ sampling points in the M time domain periodicities of the second signal and the sequence of the $i^{th}$ sampling points in the M time domain periodicities of the locally stored first reference signal, interference of the first signal on the first reference signal can be canceled, so that the energy that is of the first reference signal and that is determined by the second device can be accurate.

Optionally, the second device receives, on the first time domain symbol, the M*L sampling points corresponding to the M time domain periodicities of the second signal by using a fixed beam. In other words, in a process in which a transmission beam of the first device is measured, the second device receives the sampling point by using the fixed beam. In this way, a measured transmission beam of the first device can be more accurate, and inaccurate measurement caused when the second device switches a beam for reception is avoided.

In some possible implementations, the first sequence further includes a sequence of $j^{th}$ sampling points in the M*L sampling points corresponding to the M time domain periodicities of the second signal. The second sequence further includes a sequence of $j^{th}$ sampling points in the M*L sampling points in the M time domain periodicities of the local first reference signal. A value of j ranges between a part of positive integers of 1 to L, and i is not equal to j.

In some possible implementations, the method further includes: receiving configuration information from the first device. The configuration information indicates the second device to measure Q sampling points in the L sampling points corresponding to each time domain periodicity of the second signal. The Q sampling points include the $i^{th}$ sampling point in the L sampling points corresponding to each time domain periodicity of the second signal.

In some possible implementations, the configuration information includes L bits. The L bits included in the configuration information are in one-to-one correspondence with the L sampling points corresponding to each time domain periodicity of the second signal. When a value of each of Q bits that are in the L bits included in the configuration information is a first value, it indicates that the second device measures the Q sampling points that are in each time domain periodicity of the second signal and that are in one-to-one correspondence with the Q bits. When a value of each of (L-Q) bits other than the Q bits in the L bits is a second value, it indicates that the second device does not measure (L-Q) sampling points that are in each time domain periodicity of the second signal and that are in one-to-one correspondence with the (L-Q) bits.

Time corresponding to the (L-Q) sampling points that are in each time domain periodicity of the second signal, that are in the one-to-one correspondence with the (L-Q) bits, and that are not measured by the second device may be understood as time for the first device to switch a beam.

Optionally, when a value of each of several consecutive bits in the Q bits is the first value, it indicates that consecutive sampling points that are in each time domain periodicity and that correspond to the several consecutive bits have a quasi-colocation relationship. The second device may determine a total quantity of quasi-colocation relationships based on the Q bits, and then calculate a sum of energy of sampling points in each quasi-colocation relationship.

In some possible implementations, after the energy of the first reference signal in the second signal is determined based on the inner product of the first sequence and the second sequence, the method further includes:
sending first measurement information corresponding to the first time domain symbol to the first device, where the first measurement information includes L bits, and the L bits included in the first measurement information are in one-to-one correspondence with the L sampling points corresponding to each time domain periodicity of the second signal. When a value of a first bit in the L bits included in the first measurement information is a third value, it indicates that a sum of energy of sampling points that are in the M time domain periodicities of the first reference signal in the second signal and that meet a quasi-colocation relationship with a sampling point corresponding to the first bit is greater than a preset value. When a value of a second bit in the L bits is a fourth value, it indicates that a sum of energy of sampling points that are in the M time domain periodicities of the first reference signal in the second signal and that correspond to the second bit is less than or equal to the preset value (or could be understood as meeting a quasi-colocation relationship with a sampling point corresponding to the second bit), or indicates that the second device does not measure a sampling point that is in each time domain periodicity of the first reference signal in the second signal and that corresponds to the second bit.

Optionally, the first measurement information may be information obtained by the second device through measurement on the first time domain symbol. Therefore, the second device may send, to the first device, the first measurement information and indication information indicating the first time domain symbol. In this way, the first device may determine, based on the indication information, that the first measurement information is measurement information on the first time domain symbol. Optionally, the indication information may directly indicate the first time domain symbol, or may indicate the first time domain symbol by indicating a resource index of the first reference signal.

Optionally, the sum of the energy of the sampling points that meet the quasi-colocation relationship with the sampling point corresponding to the first bit is a part of the energy of the first reference signal, and the sum of the energy of the sampling points that meet the quasi-colocation relationship with the sampling point corresponding to the second bit is a part of the energy of the first reference signal.

In some possible implementations, the configuration information includes Q indexes. The Q indexes are in one-to-one correspondence with the Q sampling points.

Optionally, the Q indexes may be numbers ranging from 1 to L, may be numbers ranging from 0 to (L-1), or may be other numbers. This is not limited in this embodiment of this application.

Optionally, several consecutive indexes in the Q indexes correspond to several consecutive sampling points, and the several consecutive sampling points have a quasi-colocation relationship. The second device may determine a total quantity of quasi-colocation relationships based on the Q indexes, and then calculate a sum of energy of sampling points in each quasi-colocation relationship.

In some possible implementations, after the energy of the first reference signal in the second signal is determined based on the inner product of the first sequence and the second sequence, the method further includes: sending second measurement information to the first device. The second measurement information indicates a target index. The Q indexes include the target index. A sum of energy of sampling points that are in the M time domain periodicities of the first reference signal in the second signal and that meet a quasi-colocation relationship with a sampling point corresponding to the target index is greater than a preset value.

Optionally, the second measurement information may be information obtained by the second device through measurement on the first time domain symbol. Therefore, the second device may send, to the first device, the second measurement information and indication information indicating the first time domain symbol. In this way, the first device may determine, based on the indication information, that the second measurement information is measurement information on the first time domain symbol. Optionally, the indication information may directly indicate the first time domain symbol, or may indicate the first time domain symbol by indicating a resource index of the first reference signal.

In some possible implementations, the method further includes: sending third measurement information corresponding to the first time domain symbol to the first device. The third measurement information includes a sum of energy of sampling points that are in the M time domain periodicities of the first reference signal in the second signal and that meet a quasi-colocation relationship.

Optionally, if there are H quasi-colocation relationships in total, the third measurement information may include H energy sums obtained based on sampling points in the H quasi-colocation relationships. In other words, one quasi-colocation relationship corresponds to one energy sum. Optionally, if there are H quasi-colocation relationships in total, a third measurement information may include F energy sums obtained based on sampling points in F quasi-colocation relationships. One quasi-colocation relationship corresponds to one energy sum. The F energy sums are energy sums that are in the H energy sums and that are greater than a preset value. F is a positive integer less than or equal to H. In other words, the second device may directly report a sum that is of energy of sampling points in each quasi-colocation relationship and that is obtained through measurement, or report a sum that is of energy of sampling points in the F quasi-colocation relationships and that is greater than the preset value.

Optionally, F bit locations in the third measurement information are in one-to-one correspondence with the F energy sums obtained based on the sampling points in the F quasi-colocation relationships. After obtaining the F energy sums by measuring the sampling points in the F quasi-colocation relationships, the second device includes the F energy sums in the F bit locations in the third measurement information respectively. The F bit locations are in one-to-one correspondence with the F quasi-colocation relationships. After receiving the third measurement information, the first device determines, based on the F bit locations, the F energy sums that are in one-to-one correspondence with the F quasi-colocation relationships, to determine a maximum energy sum in the F energy sums. A beam for sending a group of sampling points corresponding to the maximum energy sum is a first target beam.

Optionally, H bit locations in the third measurement information are in one-to-one correspondence with the H energy sums. The H energy sums are respectively carried in the H bit locations in the third measurement information. The H bit locations are in one-to-one correspondence with the H quasi-colocation relationships. After receiving the third measurement information, the first device determines, based on the H bit locations, the H energy sums that are in one-to-one correspondence with the H quasi-colocation relationships, to determine a maximum energy sum in the H energy sums. A beam for sending a group of sampling points corresponding to the maximum energy sum is a first target beam.

Optionally, the sum of the energy of the sampling points in this embodiment of this application may be a sum of normalized energy of sampling points. Optionally, the second device may determine which sampling points have a quasi-colocation relationship. The second device determines, by dividing, by a local second sequence, an inner product of a first sequence of received sampling points having a quasi-colocation relationship and the local second sequence corresponding to the sampling points having the quasi-colocation relationship, a sum of normalized energy of the group of sampling points having the quasi-colocation relationship.

In some possible implementations, the method further includes: receiving first indication information from the first device. The first indication information indicates that the $i^{th}$ sampling points in the M*L sampling points corresponding to the M time domain periodicities of the first reference signal that is in the second signal and that is sent on the first time domain symbol have the quasi-colocation relationship.

In some possible implementations, the method further includes: receiving second indication information from the first device. The second indication information indicates the first time domain symbol.

For the foregoing possible implementations, for descriptions of the second aspect, refer to the descriptions of the first aspect. To avoid repetition, details are not described.

According to a third aspect, a signal demodulation method is provided. The method is applicable to a third device, and includes:

receiving fourth indication information and a first signal, where the fourth indication information indicates a first comb value M and a first comb offset value that correspond to L resource elements, the first comb offset value ranges from 0 to (M-1), and the L resource elements are located in a frequency domain resource corresponding to a first time domain symbol;

determining, based on the first comb value M and the first comb offset value that are indicated by the fourth indication information, (L-P) resource elements that belong to the frequency domain resource of the third device, where no signal is sent on the (L-P) resource elements; and

demodulating the first signal based on (L-P) resource elements.

Optionally, receiving the fourth indication information includes: receiving the fourth indication information from a first device. Optionally, if the first device is a third terminal device, and the third device is a fourth terminal device, receiving the fourth indication information from the first device includes: The fourth terminal device receives the fourth indication information broadcast by the third terminal device.

In some possible implementations, the method further includes:
receiving third indication information. The third indication information indicates the first time domain symbol.

Demodulating the first signal based on the (L-P) resource elements includes:
demodulating the first signal based on the (L-P) resource elements on the first time domain symbol indicated by the third indication information.

Optionally, receiving the third indication information includes: receiving the third indication information from the first device. Optionally, if the first device is a third terminal device, and the third device is a fourth terminal device, receiving the third indication information from the first device includes: The fourth terminal device receives the third indication information broadcast by the third terminal device.

In some possible implementations, the method further includes: receiving fifth indication information. The fifth indication information indicates that no signal is mapped on the (L-P) resource elements or that punctuation is performed on the (L-P) resource elements.

Demodulating the first signal based on the (L-P) resource elements on the first time domain symbol indicated by the third indication information includes:
demodulating the first signal based on a case that no signal is mapped on the (L-P) resource elements on the first time domain symbol or that punctuation is performed on the (L-P) resource elements.

For descriptions of the third aspect, refer to the descriptions of the first aspect. To avoid repetition, details are not described.

According to a fourth aspect, a signal processing method is provided. The method is applicable to a first device, and includes: sending M*L sampling points corresponding to M time domain periodicities of a first reference signal to a second device on a first time domain symbol. Each of the M time domain periodicities of the first reference signal corresponds to L sampling points. $i^{th}$ sampling points in the M*L sampling points corresponding to the M time domain periodicities of the first reference signal have a quasi-colocation relationship, and a value of i ranges between a part of positive integers of 1 to L. The first device further sends a first signal to a third device. M time domain periodicities of the first signal correspond to M*L sampling points. Each of the M time domain periodicities of the first signal corresponds to L sampling points.

A sequence of the $i^{th}$ sampling points in the M*L sampling points corresponding to the M time domain periodicities of the first reference signal is orthogonal to a sequence of $i^{th}$ sampling points in the M*L sampling points corresponding to the M time domain periodicities of the first signal. M and L are positive integers.

In some possible implementations, the $i^{th}$ sampling point and a $j^{th}$ sampling point in the L sampling points corresponding to each time domain periodicity of the first reference signal have a quasi-colocation relationship. A value of j ranges between a part of positive integers of 1 to L, and i is not equal to j.

In some possible implementations, the method further includes:
sending configuration information to the second device. The configuration information indicates the second device to measure Q sampling points in the L sampling points corresponding to each time domain periodicity of the first reference signal.

Q is a positive integer less than or equal to L.

In some possible implementations, the configuration information includes L bits. The L bits included in the configuration information are in one-to-one correspondence with the L sampling points corresponding to each time domain periodicity of the first reference signal. When a value of each of Q bits that are in the L bits included in the configuration information is a first value, it indicates that the second device measures the Q sampling points that are in each time domain periodicity of the first reference signal and that are in one-to-one correspondence with the Q bits. When a value of each of (L-Q) bits that are other than the Q bits in the L bits included in the configuration information is a second value, it indicates that the second device does not measure (L-Q) sampling points that are in each time domain periodicity of the first reference signal and that are in one-to-one correspondence with the (L-Q) bits.

In some possible implementations, the method further includes: receiving first measurement information corresponding to the first time domain symbol from the second device. The first measurement information includes L bits. The L bits included in the first measurement information are in one-to-one correspondence with the L sampling points corresponding to each time domain periodicity of the first reference signal. When a value of a first bit in the L bits included in the first measurement information is a third value, it indicates that a sum of energy of sampling points that are in the M time domain periodicities of the first reference signal and that meet a quasi-colocation relationship with a sampling point corresponding to the first bit is greater than a preset value. When a value of a second bit in the L bits is a fourth value, it indicates that a sum of energy of sampling points that are in the M time domain periodicities of the first reference signal and that meet a quasi-colocation relationship with a sampling point corresponding to the second bit is less than or equal to the preset value, or indicates that the second device does not measure a sampling point that is in each time domain periodicity of the first reference signal and that corresponds to the second bit.

In some possible implementations, the configuration information includes Q indexes. The Q indexes are in one-to-one correspondence with the Q sampling points.

In some possible implementations, the method further includes: receiving second measurement information corresponding to the first time domain symbol from the second device. The second measurement information indicates a target index. The Q indexes include the target index. A sum of energy of sampling points that are in the M time domain periodicities and that meet a quasi-colocation relationship with a sampling point corresponding to the target index is greater than a preset value.

In some possible implementations, the method further includes: receiving third measurement information corresponding to the first time domain symbol from the second device. The third measurement information includes a sum of energy of sampling points that are in the M time domain periodicities of the first reference signal and that meet a quasi-colocation relationship.

In some possible implementations, the method further includes: sending first indication information to the second device. The first indication information indicates that the $i^{th}$ sampling points in the M*L sampling points corresponding to the M time domain periodicities of the first reference signal sent on the first time domain symbol have the quasi-colocation relationship.

In some possible implementations, the method further includes: sending second indication information to the second device. The second indication information indicates the first time domain symbol.

In some possible implementations, another device is the third device. The method further includes:
sending third indication information to the third device. The third indication information indicates the first time domain symbol.

For descriptions of the fourth aspect, refer to the descriptions of the first aspect. To avoid repetition, details are not described.

According to a fifth aspect, this application provides a communication apparatus. The apparatus has a function of implementing behavior of each device in each of the foregoing aspects and the possible implementations of the foregoing aspects. The function may be implemented by using hardware, or may be implemented by executing corresponding software by hardware. The hardware or the software includes one or more modules or units corresponding to the foregoing function, for example, a determining module or unit, or a transceiver module or unit.

According to a sixth aspect, this application provides an electronic device. The electronic device includes a processor. The processor is coupled to a memory. The memory is configured to store a computer program or instructions. The processor is configured to execute the computer program or the instructions stored in the memory, to enable the method in each of the foregoing aspects and the possible implementations of the foregoing aspects to be performed.

For example, the processor is configured to execute the computer program or the instructions stored in the memory, to enable the electronic device to perform the method in each of the foregoing aspects and the possible implementations of the foregoing aspects.

Optionally, the electronic device includes one or more processors.

Optionally, the electronic device may further include the memory coupled to the processor.

Optionally, the electronic device may include one or more memories.

Optionally, the memory and the processor may be integrated together or disposed separately.

Optionally, the electronic device may further include a transceiver.

According to a seventh aspect, this application provides an electronic device, including one or more processors, a memory, and one or more computer programs. The one or more computer programs are stored in the memory. The one or more computer programs include instructions. When the instructions are executed by the electronic device, the one or more processors are enabled to perform the method in any one of the foregoing aspects or the possible implementations of the foregoing aspects, or the method described in any one of embodiments of this application.

Optionally, the electronic device may further include a touchscreen and/or a camera. The touchscreen includes a touch-sensitive surface and a display.

According to an eighth aspect, this application provides a computer-readable storage medium, including computer instructions. When the computer instructions are run on an electronic device, the electronic device is enabled to perform the foregoing aspects or any one of the possible methods of the foregoing aspects, or the method described in any one of embodiments of this application.

According to a ninth aspect, this application provides a computer program product. When the computer program product runs on an electronic device, the electronic device is enabled to perform the foregoing aspects or any one of the possible methods of the foregoing aspects, or the method described in any one of embodiments of this application.

According to a tenth aspect, this application provides an apparatus, including a unit configured to perform the method described in any one of embodiments of this application.

## BRIEF DESCRIPTION OF DRAWINGS

FIG. 1 is a diagram of an application scenario according to an embodiment of this application;
FIG. 2 is a diagram of a mapping resource element according to an embodiment of this application;
FIG. 3 is a diagram of a sampling point in time domain according to an embodiment of this application;
FIG. 4 is a diagram of sending a sampling point by using a beam according to an embodiment of this application;
FIG. 5 is a diagram of a signal processing method according to an embodiment of this application;
FIG. 6 is a diagram of another mapping resource element according to an embodiment of this application;
FIG. 7 is a diagram of another signal processing method according to an embodiment of this application;
FIG. 8 is another diagram of sending a sampling point by using a beam according to an embodiment of this application;
FIG. 9 is a diagram of still another signal processing method according to an embodiment of this application;
FIG. 10 is a diagram of still another mapping resource element according to an embodiment of this application;
FIG. 11 is a diagram of another sampling point in time domain according to an embodiment of this application;
FIG. 12 is a diagram of yet another signal processing method according to an embodiment of this application;
FIG. 13 is a diagram of yet another mapping resource element according to an embodiment of this application;
FIG. 14 is a diagram of still yet another signal processing method according to an embodiment of this application; and
FIG. 15 is a block diagram of a communication apparatus according to an embodiment of this application.

## DESCRIPTION OF EMBODIMENTS

The following describes technical solutions in embodiments of this application with reference to accompanying drawings in embodiments of this application.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or another future communication system.

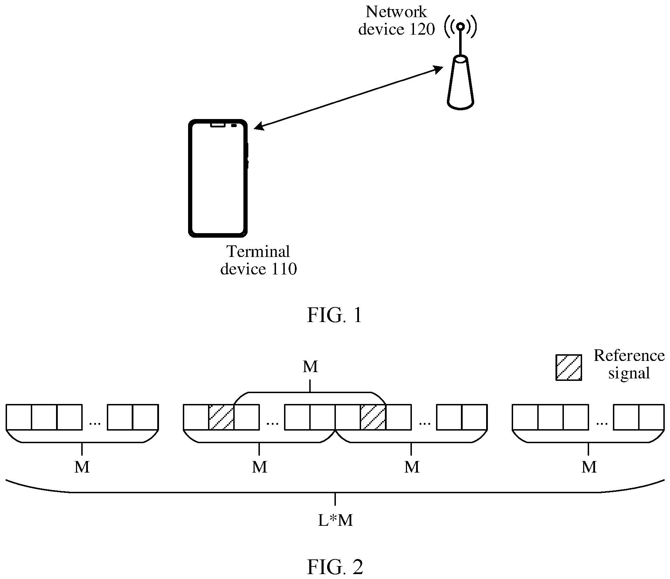

FIG. 1 is a diagram of an application scenario to which an embodiment of this application is applied. As shown in FIG. 1, a system includes a terminal device 110 and a network device 120.

The terminal device 110 is also referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user communication apparatus, or the like.

The terminal device 110 may be a device, for example, a hand-held device or a vehicle-mounted device having a wireless connection function, that provides voice/data connectivity for a user. Currently, examples of some terminal devices include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, an uncrewed aerial vehicle, a terminal device in a 5G network, and a terminal device in a future evolved public land mobile network (public land mobile network, PLMN). This is not limited in this application.

The network device 120 may also be referred to as a radio access network (radio access network, RAN) or a radio access network device. The network device 120 may be a transmission reception point (transmission reception point, TRP), an evolved NodeB (evolved NodeB, eNB, or eNodeB) in an LTE system, a home NodeB (for example, a home evolved NodeB or a home NodeB, HNB), a baseband unit (baseband unit, BBU), or a radio controller in a cloud radio access network (cloud radio access network, CRAN) scenario. Alternatively, the network device 120 may be a relay station, an access point, a vehicle-mounted device, a wearable device, an uncrewed aerial vehicle, a satellite, a network device in a 5G network, a network device in a future evolved PLMN network, or the like. Alternatively, the network device 120 may be an access point (access point, AP) in a wireless local area network (wireless local area network, WLAN) or a gNB in an NR system. Alternatively, the network device 120 may be a metro base station, a micro base station, a pico base station, a femto base station, or the like. This is not limited in this application.

In a network structure, the network device 120 may include a central unit (central unit, CU) node, a distributed unit (distributed unit, DU) node, a radio access network (radio access network, RAN) device including a CU node and a DU node, or a device including a control plane CU node (a CU-CP node), a user plane CU node (CU-UP node), and a DU node.

It should be understood that FIG. 1 shows the terminal device 110 and the network device 120 as examples merely for ease of understanding, but this should not constitute any limitation on this application. The wireless communication system may further include more network devices, or may include more or fewer terminal devices. This is not limited in this application. The terminal device 110 may be at a fixed location, or may be movable.

Optionally, the network device 120 in FIG. 1 may be alternatively replaced with a terminal device. A link for data transmission between a terminal device and a terminal device is referred to as a sidelink (sidelink). The sidelink is generally used in a scenario of direct communication such as vehicle to everything (vehicle to everything, V2X) or device to device (device to device, D2D) in an indoor commercial scenario. For example, the direct communication also needs to be performed between a plurality of terminal devices in the indoor commercial scenario. For example, a mobile phone needs to transmit a VR video to VR glasses, and the mobile phone needs to project a played image to a smart screen. In addition, the V2X is a key technology for implementing an intelligent vehicle, self-driving, and an intelligent transportation system. The V2X may include vehicle-to-network (vehicle-to-network, V2N) communication, vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and the like.

For ease of description, a device number is omitted below. For example, the "terminal device 110" may be simplified as a "terminal device", and the "network device 120" may be simplified as a "network device".

Optionally, FIG. 1 may include more terminal devices. Optionally, when FIG. 1 includes more terminal devices, FIG. 1 may not include the network device 120, that is, communication between a plurality of terminal devices may not need assistance of a network device. Optionally, when FIG. 1 includes more terminal devices, FIG. 1 may include a network device, that is, communication between a plurality of terminal devices may need assistance of the network device.

The following describes terms used in this application in detail.

1. Beam (beam)

The beam may be referred to as a spatial domain filter (spatial domain filter), a spatial filter (spatial filter), a spatial parameter (spatial parameter), or a spatial domain filtering parameter. A beam for sending a signal may be referred to as a transmission beam (transmission beam, Tx beam), a spatial domain transmission filter (spatial domain transmission filter), or a spatial transmission parameter (spatial transmission parameter). A beam for receiving a signal may be referred to as a receive beam (receive beam, Rx beam), a spatial domain receive filter (spatial domain receive filter), or a spatial receive parameter (spatial RX parameter). The beam for sending the signal and the beam for receiving the signal may be a same beam or different beams.

The transmission beam may refer to distribution of signal strength formed in different directions in space after a signal is transmitted via an antenna. The receive beam may refer to distribution of signal strength, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

Optionally, a plurality of beams having a same communication feature or similar communication features are considered as one beam. One beam may include one or more antenna ports, configured to perform transmission of a data channel, a control channel, a reference signal (such as an S-SSB, a CSI-RS, and a DMRS), and the like. The one or more antenna ports forming the beam may also be considered as one antenna port set.

Optionally, one beam corresponds to one beam index. Therefore, the beam index may uniquely identify one beam.

2. Quasi-colocation (quasi-colocation)

That sampling points have a quasi-colocation relationship represents that spatial domain filtering parameters of the sampling points are the same, spatial domain filters of the sampling points are the same, spatial filters of the sampling points are the same, spatial parameters of the sampling points are the same, or transmit/receive beams of the sampling points are the same. For example, that two sampling points have a quasi-colocation relationship represents that spatial domain filtering parameters of the two sampling points are the same, spatial domain filters of the two sampling points are the same, spatial filters of the two sampling points are the same, spatial parameters of the two sampling points are the same, or transmit/receive beams of the two sampling points are the same.

In a communication process, to overcome a path loss, two devices may perform signal transmission by using a directional beam. Therefore, before the signal transmission, the two devices first need to perform beam training. According to a conventional beam training method, only one beam can be trained on one time domain symbol. In this case, when there are numerous to-be-trained beams, there are more time domain resources occupied for beam training. This causes large beam training overheads. To resolve a problem of the large beam training overheads, in a conventional technology, a plurality of beams are trained in one time domain symbol based on a comb-like characteristic of a reference signal, to reduce overheads in time domain. However, to ensure that the reference signal has the comb-like characteristic, a device that receives the reference signal should not receive, on another resource element (resource element, RE) on the same time domain symbol, a signal other than the reference signal for beam training. This requires that, on the another RE that is on the time domain symbol and that is other than an RE for sending the reference signal, another signal can be sent only by using a beam that is unrelated to a to-be-trained beam; or no another signal is sent on the another RE. Otherwise, the device that receives the reference signal is interfered with by another signal, causing inaccurate beam measurement.

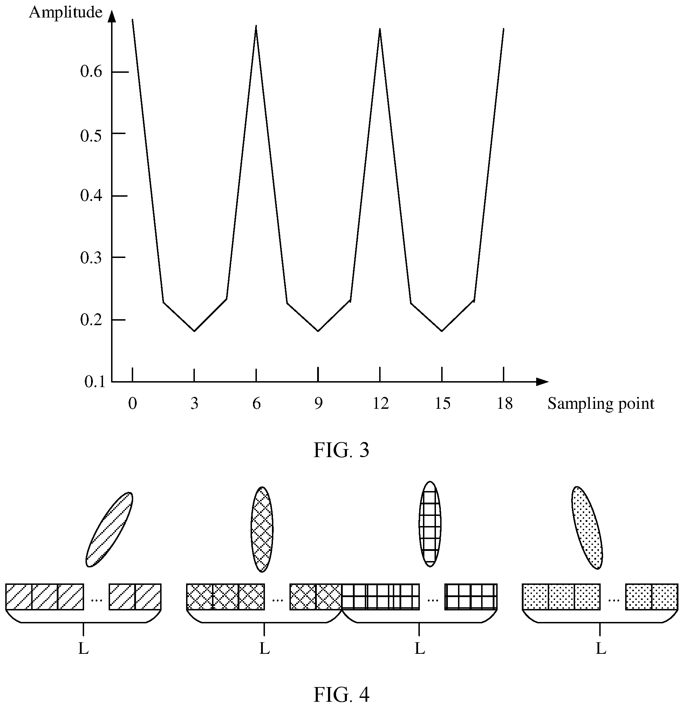

Specifically, as shown in FIG. 2, REs in FIG. 2 are REs corresponding to one time domain symbol. It is assumed that a network device sends a reference signal on the RE shown in FIG. 2, and a terminal device receives the reference signal on a corresponding RE. A comb-like structure of the reference signal is specifically represented as that one RE in every M REs is for sending a reference signal, and the reference signal is for measuring a beam. To maintain a comb-like structure of the reference signal in frequency domain, the terminal device should not receive a signal on another RE on the time domain symbol. In this case, the network device needs to send a signal on the another RE on the time domain symbol by using a beam that is unrelated to a beam for sending the reference signal, or does not send a signal on the another RE, to avoid interference on beam measurement. The reference signal shown in FIG. 2 is transformed to a time domain. As shown in FIG. 3, a sampling point that is in time domain and that exists after transformation has a time domain periodicity on one time domain symbol. Therefore, the terminal device may measure different beams in a plurality of time domain periodicities, to implement beam training on a time domain symbol. Specifically, as shown in FIG. 2, there are L*M REs in total in frequency domain. After the L*M REs are transformed to a time domain through Fourier transform, there are M time domain periodicities in total. Each time domain periodicity has L sampling points. As shown in FIG. 4, the network device may send L sampling points in a time domain periodicity of M time domain periodicities by using one beam. Beams in different time domain periodicities are different. In FIG. 4, different beams have different filling patterns, sampling points sent by using different beams have different filling patterns, and filling pattern of sampling points sent by using a same beam are the same. The terminal device may measure a sum of energy of L sampling points in a time domain periodicity, to measure a beam.

However, in the foregoing conventional technology, flexibility of resource scheduling is limited. Specifically, the network device needs to send the signal on the another RE on the time domain symbol by using the beam that is unrelated to the beam for sending the reference signal, or does not send the signal on the another RE, to avoid the interference on the beam measurement. Further, a scenario of communication through a direct connection between terminals without network device scheduling is considered. Because there is no central scheduling node in this scenario, it cannot be ensured that the beam used on the another RE is unrelated to the beam for sending the reference signal, or that no signal is sent on the another RE. This causes severe interference on the beam training. To resolve the foregoing problem, in this application, a blank RE is designed to construct local orthogonality, to cancel interference on the another RE. The following describes embodiments of this application in detail.

According to embodiments of this application, a first device may map, on P resource elements in L resource elements from resource elements corresponding to a first time domain symbol, a first reference signal to be sent to a second device. No signal is sent on (L-P) resource elements other than the P resource elements in the L resource elements corresponding to the first time domain symbol. A quantity of resource elements between any two of the L resource elements corresponding to the first time domain symbol is an integer multiple of M. The L resource elements span frequency domain resources of at least two devices, the P resource elements belong to a frequency domain resource of the second device, and the (L-P) resource elements belong to a frequency domain resource of another device. The second device measures different sampling points that are of the first reference signal and that are on the first time domain symbol, to measure different beams, to perform intra-symbol beam training and reduce resource overheads. In addition, all resource elements that are in the frequency domain resource of the another device and that are other than the (L-P) resource elements on which no signal is sent may be for data transmission, and there is no limitation on a beam for the data transmission. In this way, flexibility of resource scheduling can be improved.

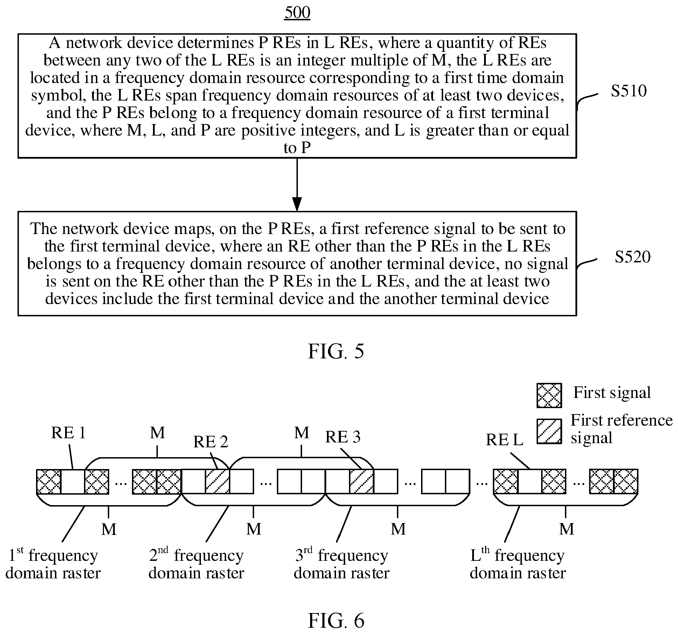

The following describes a signal processing method 500 in an embodiment of this application with reference to FIG. 5. The foregoing first device may be a network device in the method 500, the foregoing second device may be a first terminal device in the method 500, and the foregoing another device may be another terminal device in the method 500. As shown in FIG. 5, the method 500 includes the following steps.

S510: The network device determines P REs (resource elements, REs) in L resource elements, where a quantity of resource elements between any two of the L REs is an integer multiple of M REs, the L REs are located in a frequency domain resource corresponding to a first time domain symbol, the L REs span frequency domain resources of at least two devices, and the P REs belong to a frequency domain resource of the first terminal device, where M, L, and P are positive integers, and L is greater than or equal to P.

Optionally, the first time domain symbol may be a first OFDM symbol.

Optionally, that the L REs are located in a frequency domain resource corresponding to a first time domain symbol may be understood as that the L REs belong to the frequency domain resource corresponding to the first time domain symbol, or the frequency domain resource corresponding to the first time domain symbol includes the L REs.

Optionally, that the L REs span frequency domain resources of at least two devices may be understood as that the L REs belong to the frequency domain resources of the at least two devices, the L REs are located on frequency bands of the at least two devices, or a sum of the frequency domain resources of the at least two devices includes the L REs. It should be understood that in a process of allocating a resource to each terminal device, the network device allocates different frequency bands of one bandwidth part (bandwidth part, BWP) to different terminal devices, and a sum of frequency domain resources of the different terminal devices may occupy one entire BWP.

Optionally, that the P REs belong to a frequency domain resource of the first terminal device may be understood as that the frequency domain resource of the first terminal device includes the P REs, the P REs are located on a frequency band of the first terminal device, or a frequency band of the first terminal device includes the PREs.

Optionally, the first time domain symbol may correspond to M*L REs. Optionally, L may be understood as a quantity of frequency domain rasters on the frequency domain resource corresponding to the first time domain symbol. One frequency domain raster includes M REs. One of the M REs in each of the L frequency domain rasters forms the L REs. The L REs are in one-to-one correspondence with the L frequency domain rasters.

Optionally, one frequency domain raster may be one resource block (resource block, RB).

For example, any two of the L REs are separated by M REs, 2M REs, or 3M REs.

Optionally, M may also be referred to as a first comb value. The first comb value is equal to a quantity of REs included in one frequency domain raster. Each of the L REs belongs to one frequency domain raster, and first comb offset values of the L REs in respective frequency domain rasters are the same. For example, as shown in FIG. 6, the L REs are respectively an RE 1, an RE 2, ..., and an RE L, and comb offset values of the L REs in respective frequency domain rasters are 1.

S520: The network device maps, on the P REs, a first reference signal to be sent to the first terminal device, where an RE other than the P REs in the L REs belongs to a frequency domain resource of the another terminal device, and no signal is sent on the RE other than the P REs in the L REs. The at least two devices include the first terminal device and the another terminal device.

Optionally, that no signal is sent on the RE other than the P REs in the L REs may be understood as that the network device maps no signal on the RE other than the P REs in the L REs, or the network device maps a signal on the RE other than the P REs in the L REs, but performs punctuation (punctuation) processing on the RE other than the P REs in the L REs. Optionally, the RE other than the P REs in the L REs may also be referred to as a blank RE.

Optionally, a quantity of REs between any two of the P REs is an integer multiple of M, for example, M REs, 2M REs, or 3M REs. In this way, the first reference signal mapped by the network device has a comb-like structure, and no signal is sent on the RE other than the P REs in the L REs. Optionally, the P REs in the frequency domain resource of the first terminal device are for mapping the first reference signal. No signal is mapped on an RE other than the P REs in the frequency domain resource of the first terminal device.

For example, the another terminal device includes a second terminal device. As shown in FIG. 6, the network device determines that the L REs on the first time domain symbol are the RE 1, the RE 2, the RE 3, ..., and the RE L. The RE 1 belongs to a $1^{st}$ frequency domain raster, the RE 2 belongs to a $2^{nd}$ frequency domain raster, the RE 3 belongs to a $3^{rd}$ frequency domain raster, and the RE L belongs to an $L^{th}$ frequency domain raster. The RE 1 and the RE 2 are separated by M REs, the RE 2 and the RE 3 are separated by M REs, the RE 1 and the RE 3 are separated by 2M REs, and so on. The network device allocates the $1^{st}$ frequency domain raster and the $L^{th}$ frequency domain raster to the second terminal device. To be specific, the $1^{st}$ frequency domain raster and the $L^{th}$ frequency domain raster belong to a frequency domain resource of the second terminal device or are located on a frequency band of the second terminal device. The network device allocates the $2^{nd}$ frequency domain raster and the $3^{rd}$ frequency domain raster to the first terminal device. To be specific, the $2^{nd}$ frequency domain raster and the $3^{rd}$ frequency domain raster belong to the frequency domain resource of the first terminal device or are located on the frequency band of the first terminal device. The P REs of the first terminal device that are determined by the network device include the RE 2 and the RE 3 in FIG. 6. The RE 2 and the RE 3 are for mapping the first reference signal to be sent to the first terminal device. No signal is mapped on an RE that is other than the RE 2 and the RE 3 and that is in the $2^{nd}$ frequency domain raster and the $3^{rd}$ frequency domain raster of the first terminal device. The RE 1 and the RE L are for sending no signal. The network device may send a first signal to the second terminal device by using an RE that is other than the RE 1 and that is in the $1^{st}$ frequency domain raster and an RE that is other than the RE L and that is in the $L^{th}$ frequency domain raster. In addition, there is no limitation on a transmission beam. In this way, resource utilization can be improved.

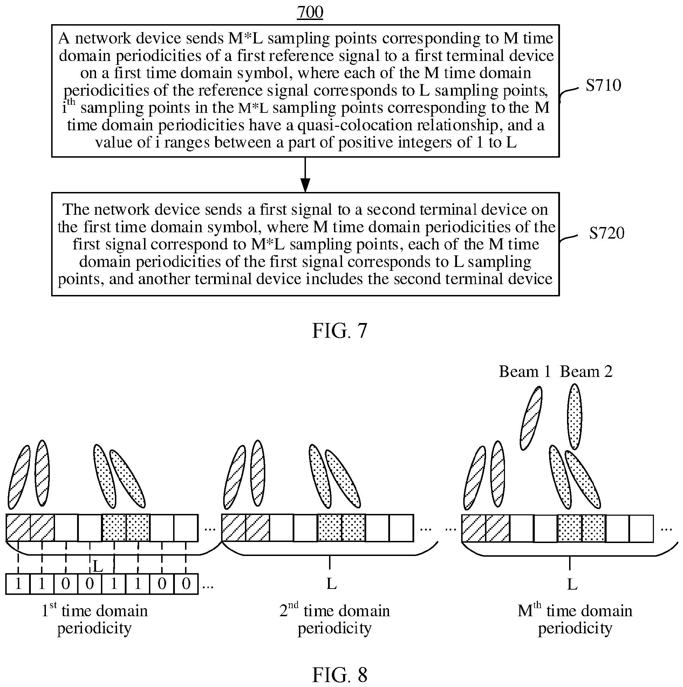

In the signal processing method provided in the method 500, the network device may map, on the P REs, the first reference signal to be sent to the first terminal device, and send no signal on the RE other than the P REs in the L REs. In this way, the first reference signal sent by the network device has the comb-like structure. The first terminal device may measure different sampling points that are of the first reference signal in time domain, to measure different beams, so that a plurality of beams are trained in one time domain symbol, to reduce resource overheads. In addition, the network device may send the first signal to the second terminal device by using a resource element that is other than (L-P) REs and that is in the frequency domain resource of the second terminal device. The network device does not need to send the first signal to the second terminal device by using a beam that is unrelated to a beam for sending the first reference signal to the first terminal device. In other words, the network device sets a blank RE in the frequency domain resource of the second terminal device, and may send, on an RE that is other than the blank RE and that is in the frequency domain resource of the second terminal device, the first signal by using a beam that is related to the beam for sending the first reference signal to the first terminal device or by using the beam that is unrelated to the beam for sending the first reference signal to the first terminal device, to improve flexibility of resource scheduling. After mapping, according to the method 500 in frequency domain, the first reference signal to be sent to the first terminal device, the network device sends, in time domain, a sampling point corresponding to the first reference signal in time domain. The following describes, with reference to a method 700 in FIG. 7, a process in which a network device sends a sampling point corresponding to a first reference signal, and a first terminal device measures the sampling point corresponding to the first reference signal. As shown in FIG. 7, the method 700 includes the following steps.

S710: The network device sends M*L sampling points corresponding to M time domain periodicities of the first reference signal to the first terminal device on a first time domain symbol, where each of the M time domain periodicities of the first reference signal corresponds to L sampling points, $i^{th}$ sampling points in the M*L sampling points corresponding to the M time domain periodicities have a quasi-colocation (quasi-colocation) relationship, and a value of i ranges between a part of positive integers of 1 to L.

Optionally, the first reference signal in the method 700 may be referred to as a sampling point that is in time domain and that is of a reference signal.

Optionally, the time domain periodicity in this embodiment of this application may be replaced with a sampling periodicity.

Optionally, the first terminal device does not measure a sampling point corresponding to a positive integer that is not taken by i and that ranges from 1 to L. Time corresponding to these sampling points that is/are not measured by the first terminal device is time for the network device to switch a beam.

M in the method 700 is M in the method 500, and L in the method 700 is L in the method 500.

Optionally, that $i^{th}$ sampling points in the M*L sampling points corresponding to the M time domain periodicities of the first reference signal have a quasi-colocation relationship may be understood as that a spatial domain filtering parameter of the $i^{th}$ sampling points in the M*L sampling points corresponding to the M time domain periodicities of the first reference signal are the same, transmit/receive beams of the $i^{th}$ sampling points in the M*L sampling points corresponding to the M time domain periodicities of the first reference signal are the same, or the $i^{th}$ sampling points in the M*L sampling points corresponding to the M time domain periodicities of the first reference signal pass through a same transmission channel. As shown in FIG. 8, there are M time domain periodicities in total, and each time domain periodicity has L sampling points. The network device sends sampling points corresponding to each time domain periodicity by using a same beam. For example, the network device sends, by using a beam 1, a $1^{st}$ sampling point and a $2^{nd}$ sampling point that are in each time domain periodicity, and sends, by using a beam 2, a $5^{th}$ sampling point and a $6^{th}$ sampling point that are in each time domain periodicity. A value of i in FIG. 8 may be 1, 2, 5, or 6. Time corresponding to a $3^{rd}$ sampling point and a $4^{th}$ sampling point that are in each time domain periodicity is time required by the network device to switch from the beam 1 to the beam 2.

Optionally, a quantity of beams to be trained by the network device is not limited in this embodiment of this application, and the quantity of beams to be trained by the network device may be greater than, less than, or equal to L. When the quantity of beams to be trained by the network device is less than L, the network device may send a plurality of sampling points by using one beam. For example, as shown in FIG. 8, the network device sends, by using the beam 1, the $1^{st}$ sampling point and the $2^{nd}$ sampling point that are in each time domain periodicity, and sends, by using the beam 2, the $5^{th}$ sampling point and the $6^{th}$ sampling point that are in each time domain periodicity. In other words, the beam 1 sends two sampling points in each time domain periodicity, and sends 2M sampling points in total, and the beam 2 sends two sampling points in each time domain periodicity, and sends 2M sampling points in total. When the quantity of beams to be trained by the network device is greater than or equal to L, the network device may send, on the first time domain symbol, the M*L sampling points corresponding to the M time domain periodicities by using no more than L beams, and then send, on a second time domain symbol, the M*L sampling points corresponding to the M time domain periodicities by using a remaining beam.

Optionally, that $i^{th}$ sampling points in the M*L sampling points corresponding to the M time domain periodicities of the first reference signal have a quasi-colocation relationship may include: The $i^{th}$ sampling point and a $j^{th}$ sampling point in the L sampling points corresponding to each time domain periodicity of the first reference signal have a quasi-colocation relationship. A value of j is a positive integer ranging from 1 to L, and a value of i is different from a value of j. In other words, sampling points in each time domain periodicity of the first reference signal also have a quasi-colocation relationship. A plurality of sampling points that have a quasi-colocation relationship may belong to a same time domain periodicity or different time domain periodicities. Alternatively, a part of a plurality of sampling points that have a quasi-colocation relationship may belong to a time domain periodicity, and a part of the plurality of sampling points that have the quasi-colocation relationship may belong to different time domain periodicities. For example, as shown in FIG. 8, when i=1, and j=2, it indicates that the $1^{st}$ sampling point and the $2^{nd}$ sampling point that are in the L sampling points corresponding to each time domain periodicity have a quasi-colocation relationship. To be specific, a $1^{st}$ sampling point and a $2^{nd}$ sampling point that are in a same time domain periodicity of the M time domain periodicities have a quasi-colocation relationship, and a $1^{st}$ sampling point and a $2^{nd}$ sampling point that are in different time domain periodicities of the M time domain periodicities also have the quasi-colocation relationship. In this case, 2M sampling points in total have the quasi-colocation relationship. In other words, spatial domain filtering parameters of the 2M sampling points are the same, transmit/receive beams of the 2M sampling points are the same, or the 2M sampling points pass through a same transmission channel. When i=5, and j=6, it indicates that the $5^{th}$ sampling point and the $6^{th}$ sampling point that are in the L sampling points corresponding to each time domain periodicity of the first reference signal have another quasi-colocation relationship, that is, 2M sampling points in total have the quasi-colocation relationship. In other words, spatial domain filtering parameters of the 2M sampling points are the same, transmit/receive beams of the 2M sampling points are the same, or the 2M sampling points pass through a same transmission channel.

Optionally, the method 700 further includes: The network device sends second indication information to the first terminal device. The second indication information indicates the first time domain symbol. Optionally, the second indication information may directly indicate the first time domain symbol. Optionally, the second indication information specifically indicates a frame index of a frame in which the first time domain symbol is located, a slot index of a slot in the frame in which the first time domain symbol is located, and a symbol index of a symbol in the slot in which the first time domain symbol is located. Optionally, the second indication information specifically indicates a slot offset of the slot in which the first time domain symbol is located relative to a slot in which the network device sends the second indication information, and the symbol index of a symbol in the slot in which the first time domain symbol is located. Optionally, the network device sends the second indication information to the first terminal device before the first time domain symbol.

Optionally, the second indication information may indicate the first time domain symbol by indicating a resource index of the first reference signal. A manner of indicating the first time domain symbol is not limited in this embodiment of this application.

Optionally, the network device may configure a time domain resource for training a transmission beam and a time domain resource of a receive beam of the first terminal device. If the first time domain symbol indicated by the second indication information is the time domain resource configured for training the transmission beam, the first terminal device determines that the network device needs to train the transmission beam. If the first time domain symbol indicated by the second indication information is the time domain resource configured for training the receive beam, the first terminal device determines that the network device needs to train the receive beam of the first terminal device.

Optionally, the network device may send the second indication information to the first terminal device by using downlink control information (downlink control information, DCI), a medium access control (medium access control, MAC) control element (control element, CE), or radio resource control (Radio Resource Control, RRC) signaling.

Optionally, the method 700 further includes: The network device sends configuration information to the first terminal device. The configuration information indicates the first terminal device to measure Q sampling points in the L sampling points corresponding to each time domain periodicity of the first reference signal. Q is a positive integer less than or equal to L. It should be understood that in this case, the network device switches the transmission beam to send the sampling point corresponding to the first reference signal, and the first terminal device receives the sampling point by using a fixed beam. Therefore, the network device sends the configuration information to the first terminal device, and the first terminal device measures energy of the sampling point based on the configuration information, to measure the beam. In addition, the first terminal device also reports measurement information to the network device, and the network device may determine a first target beam from the transmission beam based on the measurement information. The following specifically describes the configuration information and the measurement information. Optionally, the network device may send the configuration information to the first terminal device by using DCI, a MAC CE, or RRC signaling.

It may be understood that behavior of sending, by the network device, the sampling point corresponding to the first reference signal is periodic, to be specific, in each time domain periodicity, the behavior of sending, by the network device, the sampling point corresponding to the first reference signal is the same. For example, in FIG. 8, the network device sends, by using the beam 1, the 1st sampling point and the 2nd sampling point that are in each time domain periodicity, and sends, by using the beam 2, the 5th sampling point and the 6th sampling point that are in each time domain periodicity.

The following describes the configuration information in two cases.

Case 1: The configuration information includes L bits, and the L bits included in the configuration information are in one-to-one correspondence with the L sampling points corresponding to each time domain periodicity of the first reference signal. When a value of each of Q bits in the L bits is a first value, it indicates that the first terminal device measures the Q sampling points that are in each time domain periodicity of the first reference signal and that are in one-to-one correspondence with the Q bits. When a value of each of (L-Q) bits other than the Q bits in the L bits is a second value, it indicates that the first terminal device does not measure (L-Q) sampling points that are in each time domain periodicity of the first reference signal and that are in one-to-one correspondence with the (L-Q) bits. The first terminal device may measure the Q sampling points that are in each time domain periodicity and that are in one-to-one correspondence with the Q bits, and do not measure the (L-Q) sampling points that are in each time domain periodicity and that are in one-to-one correspondence with the (L-Q) sampling points. Optionally, when a value of each of several consecutive bits in the Q bits is the first value, it indicates that sampling points that are in each time domain periodicity and that correspond to the several bits have a quasi-colocation relationship. For example, when the first value is 1, the second value is 0, the value of each of the Q bits in total in the L bits is 1, the value of each of the remaining (L-Q) bits is 0, and the value of each of the several consecutive bits in the Q bits is 1, it indicates that the sampling points that are in each time domain periodicity and that correspond to the several bits have the quasi-colocation relationship. As shown in FIG. 8, the L bits included in the configuration information are 11001100. In this case, L is 8, and the first terminal device measures the 1st sampling point, the 2nd sampling point, the 5th sampling point, and the 6th sampling point that are in each of the M time domain periodicities, and does not measure the 3rd sampling point, the 4th sampling point, a 7th sampling point, and an 8th sampling point that are in each time domain periodicity. The 1st sampling point and the 2nd sampling point that are in each time domain periodicity have a quasi-colocation relationship, and the 5th sampling point and the 6th sampling point that are in each time domain periodicity have another quasi-colocation relationship. Time corresponding to the 3rd sampling point, the 4th sampling

point, the 7th sampling point, and the 8th sampling point that are in each time domain periodicity is time required by the network device to switch the beam.

In other words, in Case 1, the network device may indicate, in a bitmap (bitmap) manner, the first terminal device to measure which sampling points in each time domain periodicity of the first reference signal and not to measure which sampling points in each time domain periodicity of the first reference signal. In addition, measurement behavior of the first terminal device in each time domain periodicity is consistent.

Optionally, in Case 1, the network device may receive first measurement information from the first terminal device. The first measurement information includes L bits. The L bits included in the first measurement information are in one-to-one correspondence with the L sampling points corresponding to each time domain periodicity of the first reference signal. When a value of a first bit in the L bits is a third value, it indicates that a sum of energy of sampling points that are in the M time domain periodicities of the first reference signal and that meet a quasi-colocation relationship with a sampling point corresponding to the first bit is greater than a preset value. When a value of a second bit in the L bits is a fourth value, it indicates that a sum of energy of sampling points that are in the M time domain periodicities of the first reference signal and that meet a quasi-co-location relationship with a sampling point corresponding to the second bit is less than or equal to the preset value, or it indicates that the first terminal device does not measure a sampling point that is in each time domain periodicity of the first reference signal and that corresponds to the second bit.

Optionally, the first measurement information may be information obtained by the first terminal device through measurement on the first time domain symbol. Therefore, the network device may receive, from the first terminal device, the first measurement information and indication information indicating the first time domain symbol. In this way, the network device may determine, based on the indication information, that the first measurement information is measurement information on the first time domain symbol. Optionally, the indication information may directly indicate the first time domain symbol, or may indicate the first time domain symbol by indicating the resource index of the first reference signal.

It should be noted that a quantity Q of bits that are in the configuration information and that are each with a value of the first value is greater than or equal to a quantity of bits that are in the first measurement information and that are each with a value of the third value. In other words, a quantity of sampling points that the network device configures the first terminal device to measure is greater than or equal to a quantity of sampling points that is reported by the first terminal device. For example, Q is 4, and the quantity of bits that are in the first measurement information and that are each with the value of the third value is 2. As shown in FIG. 8, when the L bits included in the configuration information are 11001100, it indicates that the first terminal device needs to measure four sampling points in each time domain periodicity. The four sampling points are respectively the 1st sampling point, the 2nd sampling point, the 5th sampling point, and the 6th sampling point. The first terminal device determines energy of the beam 1 based on a sum of energy of the 1st sampling point and the 2nd sampling point that are in each time domain periodicity, and determines energy of the beam 2 based on a sum of energy of the 5th sampling point and the 6th sampling point that are in each time domain periodicity. The first terminal device determines that the energy of the beam 1 is greater than a preset value. Therefore, the L bits included in the first measurement information that may be reported by the first terminal device may be 11000000. The network device may determine the first target beam as the beam 1 based on 11000000.

Optionally, the preset value may be a preconfigured value, or may be a value configured by the network device for the first terminal device.

Optionally, the configuration information determined by the network device is related to a beam used by the network device. Specifically, if the network device sends a plurality of sampling points in each time domain periodicity of the first reference signal by using one beam, values of bits that are in the configuration information and that correspond to the plurality of sampling points are the same, that is, all are the first value. In this case, the first terminal device needs to measure the plurality of sampling points in each periodicity, to measure a corresponding beam. If the network device sends one sampling point in each time domain periodicity of the first reference signal by using one beam, a value of a bit that is in the configuration information and that corresponds to the sampling point is the first value. For example, as shown in FIG. 8, if the network device sends, by using the beam 1, a 1st sampling point and a 2nd sampling point that are in each time domain periodicity of the first reference signal, and sends, by using the beam 2, a 5th sampling point and a 6th sampling point that are in each time domain periodicity of the first reference signal, values of the L bits in the configuration information are 11001100.

Optionally, the third value is different from the fourth value, and the first value is different from the second value. However, the third value may be the same as or different from the first value, or the fourth value may be the same as or different from the second value. For example, the third value is 1, and the fourth value is 0.

Optionally, after receiving the first measurement information, the network device may determine the first target beam based on the first measurement information. The network device may send data to the first terminal device by using the first target beam.

Optionally, that the network device determines the first target beam based on the first measurement information includes: The network device determines, as a candidate beam, a beam corresponding to a sampling point corresponding to the first bit that is in the first measurement information and that is with a value of the third value, and determines the first target beam from the candidate beam. Optionally, that the network device determines the first target beam from the candidate beam includes: The network device determines any beam in the candidate beam as the first target beam. For example, with reference to the example in FIG. 8, the L bits included in the first measurement information reported by the first terminal device may be 11001100. In this case, the network device determines, as candidate beams, the beam 1 for sending the 1st sampling point and the 2nd sampling point that are in each time domain periodicity of the first reference signal and the beam 2 for sending the 5th sampling point and the 6th sampling point that are in each time domain periodicity of the first reference signal. The network device may use either of the two beams as the first target beam. For another example, with reference to the example in FIG. 8, the L bits included in the configuration information are 1100110000, and the L bits included in the first measurement information are 1100000000. In this case, the network device determines, as the first target beam, the beam 1 for sending the 1st sampling point and the 2nd sampling point.

Optionally, sampling points that meet the quasi-colocation relationship may be sampling points in a same time domain periodicity, or may be sampling points in different time domain periodicities. The first terminal device needs to measure all the sampling points that meet the quasi-colocation relationship, to determine a sum of energy of the sampling points, to measure beam quality. For example, as shown in FIG. 8, the 1st sampling point and the 2nd sampling point that are in each time domain periodicity of the first reference signal have the quasi-colocation relationship. The first terminal device needs to measure the 1st sampling point and the 2nd sampling point that are in each time domain periodicity, to calculate a sum of energy of the 2M sampling points. If the sum of the energy of the 2M sampling points is greater than the preset value, a value of a 1st bit that is in the first measurement information and that corresponds to the 1st sampling point is the third value, and a value of a 2nd bit corresponding to the 2nd sampling point is the third value. For example, the L bits included in the first measurement information are 11000000.

Optionally, in Case 1, the network device may receive third measurement information from the first terminal device. The third measurement information includes a sum of energy of sampling points that are in the M time domain periodicities of the first reference signal and that meet a quasi-colocation relationship. The network device determines the first target beam based on the sum that is included in the third measurement information and that is of the energy of the sampling points that are in the M time domain periodicities of the first reference signal and that meet the quasi-colocation relationship. Optionally, if there are H quasi-colocation relationships in total, the third measurement information may include H energy sums obtained based on sampling points in the H quasi-colocation relationships. One quasi-colocation relationship corresponds to one energy sum. In this case, the network device may determine a maximum energy sum in the H energy sums. The maximum energy sum corresponds to a target quasi-colocation relationship. A beam for sending sampling points having the target quasi-colocation relationship is the first target beam. For example, the L bits included in the configuration information are 11001100, and the first terminal device determines that there are two quasi-colocation relationships in total. The two quasi-colocation relationships are respectively a first quasi-colocation relationship corresponding to the 1st sampling point and the 2nd sampling point that are in each time domain periodicity, and a second quasi-colocation relationship corresponding to the 5th sampling point and the 6th sampling point that are in each time domain periodicity. The first terminal device measures energy of the 1st sampling point and the 2nd sampling point that are in each time domain periodicity, to obtain a sum A1 of energy corresponding to the first quasi-colocation relationship. The first terminal device measures energy of the 5th sampling point and the 6th sampling point that are in each time domain periodicity, to obtain a sum A2 of energy corresponding to the second quasi-colocation relationship. The first terminal device may report A1 and A2. If A1 is greater than A2, the network device determines, as the first target beam, the beam 1 for sending the 11st sampling point and the 2nd sampling point that are in each time domain periodicity. If A1 is less than A2, the network device determines, as the first target beam, the beam 2 for sending the 5th sampling point and the 6th sampling point that are in each time domain periodicity. Optionally, if there are the H quasi-colocation relationships in total, a third measurement information may include F energy sums obtained based on sampling points in F quasi-colocation relationships. In addition, F is less than or equal to H. One quasi-colocation relationship corresponds to one energy sum. The F energy sums are energy sums that are in the H energy sums and that are greater than a preset value. F is a positive integer less than or equal to H. In other words, a second device may directly report a sum that is of energy of sampling points in each quasi-colocation relationship and that is obtained through measurement, or report a sum that is of energy of sampling points in the F quasi-colocation relationships and that is greater than the preset value. Optionally, the sum of the energy of the sampling points in this embodiment of this application may be a sum of normalized energy of sampling points.

Optionally, F bit locations in the third measurement information are in one-to-one correspondence with the F energy sums obtained based on the sampling points in the F quasi-colocation relationships. After obtaining the F energy sums by measuring the sampling points in the F quasi-colocation relationships, the first terminal device includes the F energy sums in the F bit locations in the third measurement information respectively. The F bit locations are in one-to-one correspondence with the F quasi-colocation relationships. After receiving the third measurement information, the network device determines, based on the F bit locations, the F energy sums that are in one-to-one correspondence with the F quasi-colocation relationships, to determine a maximum energy sum in the F energy sums. A beam for sending a group of sampling points corresponding to the maximum energy sum is the first target beam.

Optionally, H bit locations in the third measurement information are in one-to-one correspondence with the H energy sums. The H energy sums are respectively carried in the H bit locations in the third measurement information. The H bit locations are in one-to-one correspondence with the H quasi-colocation relationships. After receiving the third measurement information, the network device determines, based on the H bit locations, the H energy sums that are in one-to-one correspondence with the H quasi-colocation relationships, to determine a maximum energy sum in the H energy sums. A beam for sending a group of sampling points corresponding to the maximum energy sum is the first target beam.

Optionally, the third measurement information may be information obtained by the first terminal device through measurement on the first time domain symbol. Therefore, the network device may receive, from the first terminal device, the third measurement information and indication information indicating the first time domain symbol. In this way, the network device may determine, based on the indication information, that the third measurement information is measurement information on the first time domain symbol. Optionally, the indication information may directly indicate the first time domain symbol, or may indicate the first time domain symbol by indicating the resource index of the first reference signal.

Case 2: The configuration information includes Q indexes, and the Q indexes are in one-to-one correspondence with the Q sampling points. The first terminal device determines the Q sampling points based on the Q indexes, and measures the Q sampling points in each time domain periodicity of the first reference signal. For example, if the network device configures the first terminal device to measure the 1st sampling point, the 2nd sampling point, the 5th sampling point, and the 6th sampling point that are in each time domain periodicity in FIG. 8, the configuration information includes four indexes, which are respectively 0, 1, 4, and 5. 0 is an index of the 1st sampling point, 1 is an index of the 2nd sampling point, 4 is an index of the 5th sampling point, and 5 is an index of the 6th sampling point. Optionally, consecutive indexes may indicate that sampling points corresponding to these indexes are sent by using one beam, that is, the sampling points corresponding to these indexes have a quasi-colocation relationship. For example, when the configuration information includes 0, 1, 4, and 5, it indicates that the network device sends, by using one beam, the 1st sampling point and the 2nd sampling point that are in each time domain periodicity, and sends, by using another beam, the 5th sampling point and the 6th sampling point that are in each time domain periodicity.

Optionally, the Q indexes may be numbers ranging from 1 to L, may be numbers ranging from 0 to (L-1), or may be other numbers. This is not limited in this embodiment of this application.

Optionally, in Case 2, the first terminal device sends second measurement information to the network device. The second measurement information indicates a target index. The Q indexes include the target index. A sum of energy of sampling points that are in the M time domain periodicities of the first reference signal and that meet a quasi-colocation relationship with a sampling point corresponding to the target index is greater than a preset value. There may be one or more target indexes. Optionally, the second measurement information may directly or indirectly indicate the target index. For example, the second measurement information may indicate an interval segment of the target index. For example, the configuration information includes Q indexes 0, 1, and 2. Because 0, 1, and 2 are respectively indexes that are of the 1st sampling point, the 2nd sampling point, and the 3rd sampling point and that are consecutive in each time domain periodicity, the 1st sampling point, the 2nd sampling point, and the 3rd sampling point that are in each time domain periodicity have the quasi-colocation relationship. The first terminal device determines that a sum of energy of the 1st sampling point, the 2nd sampling point, and the 3rd sampling point that are in each time domain periodicity of the first reference signal is greater than a preset value. In this case, the second measurement information may be 0, 2. 0, 2 represent that a sum of energy of a sampling point with an index of 0 to a sampling point with an index of 2 in each time domain periodicity is greater than the preset value. For example, the sum of the energy of the 1st sampling point, the 2nd sampling point, and the 3rd sampling point is greater than the preset value.

Optionally, the preset value may be a preconfigured value, or may be a value configured by the network device for the first terminal device. Preset values in Case 1 and Case 2 may be the same or different. This is not limited in this embodiment of this application.

Optionally, the second measurement information may be information obtained by the first terminal device through measurement on the first time domain symbol. Therefore, the network device may receive, from the first terminal device, the second measurement information and indication information indicating the first time domain symbol. In this way, the network device may determine, based on the indication information, that the second measurement information is measurement information on the first time domain symbol. Optionally, the indication information may directly indicate the first time domain symbol, or may indicate the first time domain symbol by indicating the resource index of the first reference signal.

Optionally, the Q indexes included in the configuration information determined by the network device are related to a beam used by the network device. Specifically, if the network device sends a plurality of sampling points in each time domain periodicity of the first reference signal by using one beam, the configuration information includes indexes of the plurality of sampling points. In other words, if the network device sends a plurality of sampling points by using one beam, the first terminal device needs to measure the plurality of sampling points to measure the transmission beam. If the network device sends one sampling point in each time domain periodicity of the first reference signal by using one beam, the Q indexes in the configuration information may be determined based on implementation of the network device.

Optionally, when needing to send the second indication information and the configuration information to the first terminal device, the network device may simultaneously send the second indication information and the configuration information to the first terminal device, or may separately send the second indication information and the configuration information to the first terminal device. A sequence of sending the second indication information and the configuration information is not limited in this embodiment of this application. It may be understood that the network device may send the second indication information and the configuration information to the first terminal device before the first time domain symbol.

Optionally, in Case 2, the network device may receive third measurement information from the first terminal device. The third measurement information includes a sum of energy of sampling points that meet a quasi-colocation relationship. The network device determines the first target beam based on the sum that is included in the third measurement information and that is of the energy of the sampling points that meet the quasi-colocation relationship. Optionally, if there are H quasi-colocation relationships in total, the third measurement information may include H energy sums obtained based on sampling points in the H quasi-colocation relationships. One quasi-colocation relationship corresponds to one energy sum. In this case, the network device may determine a maximum energy sum in the H energy sums. The maximum energy sum corresponds to a target quasi-colocation relationship. A beam for sending sampling points having the target quasi-colocation relationship is the first target beam. For example, the four indexes included in the configuration information are respectively 0, 1, 4, and 5. Because indexes 0 and 1 are two consecutive indexes, and indexes 4 and 5 are two consecutive indexes, the first terminal device determines that there are two quasi-colocation relationships in total. The two quasi-colocation relationships are respectively a first quasi-colocation relationship corresponding to the $1^{st}$ sampling point and the $2^{nd}$ sampling point that are in each time domain periodicity, and a second quasi-colocation relationship corresponding to the $5^{th}$ sampling point and the $6^{th}$ sampling point that are in each time domain periodicity. The first terminal device measures energy of the $1^{st}$ sampling point and the $2^{nd}$ sampling point that are in each time domain periodicity, to obtain a sum A1 of energy corresponding to the first quasi-colocation relationship. The first terminal device measures the $5^{th}$ sampling point and the $6^{th}$ sampling point that are in each time domain periodicity, to obtain a sum A2 of energy corresponding to the second quasi-colocation relationship. The first terminal device may report A1 and A2. If A1 is greater than A2, the network device determines, as the first target beam, the beam 1 for sending a $1^{st}$ sampling point and a $2^{nd}$ sampling point that are in each time domain periodicity. If A1 is less than A2, the network device determines, as the first target beam, the beam 2 for sending a $5^{th}$ sampling point and a $6^{th}$ sampling point that are in each time domain periodicity. Optionally, if there are H quasi-colocation relationships in total, the third measurement information may include F energy sums obtained based on sampling points in F quasi-colocation relationships. One quasi-colocation relationship corresponds to one energy sum. The F energy sums are energy sums that are in the H energy sums and that are greater than a preset value. F is a positive integer less than or equal to H. In other words, a second device may directly report a sum that is of energy of sampling points in each quasi-colocation relationship and that is obtained through measurement, or report a sum that is of energy of sampling points in the F quasi-colocation relationships and that is greater than the preset value.

Optionally, F bit locations in the third measurement information are in one-to-one correspondence with the F energy sums obtained based on the sampling points in the F quasi-colocation relationships. After obtaining the F energy sums by measuring the sampling points in the F quasi-colocation relationships, the first terminal device includes the F energy sums in the F bit locations in the third measurement information respectively. The F bit locations are in one-to-one correspondence with the F quasi-colocation relationships. After receiving the third measurement information, the network device determines, based on the F bit locations, the F energy sums that are in one-to-one correspondence with the F quasi-colocation relationships, to determine a maximum energy sum in the F energy sums. A beam for sending a group of sampling points corresponding to the maximum energy sum is the first target beam.

Optionally, H bit locations in the third measurement information are in one-to-one correspondence with the H energy sums. The H energy sums are respectively carried in the H bit locations in the third measurement information. The H bit locations are in one-to-one correspondence with the H quasi-colocation relationships. After receiving the third measurement information, the network device determines, based on the H bit locations, the H energy sums that are in one-to-one correspondence with the H quasi-colocation relationships, to determine a maximum energy sum in the H energy sums. A beam for sending a group of sampling points corresponding to the maximum energy sum is the first target beam.

Optionally, the third measurement information may be information obtained by the first terminal device through measurement on the first time domain symbol. Therefore, the network device may receive, from the first terminal device, the third measurement information and indication information indicating the first time domain symbol. In this way, the network device may determine, based on the indication information, that the third measurement information is measurement information on the first time domain symbol. Optionally, the indication information may directly indicate the first time domain symbol, or may indicate the first time domain symbol by indicating the resource index of the first reference signal.

S720: The network device sends a first signal to a second terminal device on the first time domain symbol, where M time domain periodicities of the first signal correspond to M*L sampling points, and each of the M time domain periodicities of the first signal corresponds to L sampling points.

A sequence of the $i^{th}$ sampling points in the M*L sampling points corresponding to the M time domain periodicities of the first reference signal is orthogonal to a sequence of $i^{th}$ sampling points in the M*L sampling points corresponding to the M time domain periodicities of the first signal. In other words, a length of the sequence of the $i^{th}$ sampling points in the M*L sampling points corresponding to the M time domain periodicities of the first reference signal is equal to a length of the sequence of the $i^{th}$ sampling points in the M*L sampling points corresponding to the M time domain periodicities of the first signal. In addition, an inner product of the sequence of the $i^{th}$ sampling points in the M*L sampling points corresponding to the M time domain periodicities of the first reference signal and the sequence of the $i^{th}$ sampling points in the M*L sampling points corresponding to the M time domain periodicities of the first signal is zero.

In the method 700, the sequence of the $i^{th}$ sampling points in the M*L sampling points corresponding to the M time domain periodicities of the first reference signal is orthogonal to the sequence of the $i^{th}$ sampling points in the M*L sampling points corresponding to the M time domain periodicities of the first signal. In this case, at the foregoing sampling point, the first reference signal sent by the network device to the first terminal device and the first signal sent by the network device to the second terminal device do not interfere with each other, so that energy that is of the first reference signal and that is obtained by the first terminal device through measurement does not include energy of the first signal. In this way, the energy that is of the first reference signal and that is measured by the first terminal device is accurate. This can improve beam training accuracy.

Optionally, a sequence of the $i^{th}$ sampling point and the $j^{th}$ sampling point in the L sampling points corresponding to each time domain periodicity of the first reference signal is orthogonal to a sequence of the $i^{th}$ sampling point and a $j^{th}$ sampling point in the L sampling points corresponding to each time domain periodicity of the first signal. For example, when i=1, and j=2, it indicates that a sequence that has a length of 2M and that includes the $1^{st}$ sampling point and the $2^{nd}$ sampling point that are in the L sampling points corresponding to each time domain periodicity of the first reference signal is orthogonal to a sequence that has a length of 2M and that includes a $1^{st}$ sampling point and a $2^{nd}$ sampling point that are in the L sampling points corresponding to each time domain periodicity of the first signal. In other words, a sequence of sampling points of the first reference signal is orthogonal to a sequence of sampling points corresponding to the first signal. Two sequences that are orthogonal to each other may be a sequence of one sampling point in each time domain periodicity, or may be a sequence of two or more sampling points in each time domain periodicity. Lengths of the two sequences that are orthogonal to each other are the same, and a sampling point forming each sequence is a sampling point that is in each time domain periodicity and that is at a same location. Optionally, when the $i^{th}$ sampling point and the $j^{th}$ sampling point in the L sampling points corresponding to each time domain periodicity of the first reference signal have the quasi-colocation relationship, the sequence of the $i^{th}$ sampling point and the $j^{th}$ sampling point in the L sampling points corresponding to each time domain periodicity of the first reference signal is orthogonal to the sequence of the $i^{th}$ sampling point and the $j^{th}$ sampling point in the L sampling points corresponding to each time domain periodicity of the first signal.

When the method 500 may be combined with the method 700, the L REs span frequency bands of at least two terminal devices. In the method 500, the P REs in the L REs are for mapping the first reference signal to be sent to the first terminal device in S710, and the P REs are located on the frequency band of the first terminal device. The RE other than the P REs in the L REs in the method 500 is located on a frequency band of the another terminal device, and no signal is sent on the RE other than the P REs in the L REs. The another terminal device includes the second terminal device. The network device may map the first signal on the RE that is on the frequency band of the another terminal device and that is other than (L-P) REs. The (L-P) REs are REs other than P REs in the L REs. In this design, the sequence of the $i^{th}$ sampling points in the M*L sampling points corresponding to the M time domain periodicities of the first reference signal in time domain can be orthogonal to the sequence of the $i^{th}$ sampling points in the M*L sampling points corresponding to the M time domain periodicity of the first signal.

Optionally, a first sequence includes the sequence of the $i^{th}$ sampling points in the M*L sampling points corresponding to the M time domain periodicities of the first reference signal.

Optionally, the first signal may be data or signaling. This is not limited in this embodiment of this application.

Optionally, a relationship between the M time domain periodicities of the first reference signal and the M time domain periodicities of the first signal may be: A quantity of time domain periodicities of the first reference signal is the same as a quantity of time domain periodicities of the first signal, that is, both are M; and a quantity of sampling points in one time domain periodicity of the first reference signal is the same as a quantity of sampling points in one time domain periodicity of the first signal, that is, both are L, but sampling points in one time domain periodicity of the first reference signal are different from sampling points in one time domain periodicity of the first signal.

Optionally, when the method 500 may be combined with the method 700, that the network device sends a first signal to a second terminal device includes: The network device sends the first signal to the second terminal device on an RE that is other than (L-P) REs and that is in a frequency domain resource of the second terminal device. The (L-P) REs are REs other than P REs in the L REs.

Optionally, the method 700 further includes: The network device sends third indication information to the second terminal device. The second terminal device may receive the third indication information. The third indication information indicates the first time domain symbol. Optionally, the network device may send the third indication information to the second terminal device by using DCI, a MAC CE, or RRC signaling. The second terminal device may demodulate the first signal based on the third indication information. Optionally, the third indication information specifically indicates the frame index of the frame in which the first time domain symbol is located, the slot index of the slot in the frame in which the first time domain symbol is located, and the symbol index of a symbol in the slot in which the first time domain symbol is located. Optionally, the third indication information specifically indicates a slot offset of the slot in which the first time domain symbol is located relative to the slot in which the network device sends the third indication information, and the symbol index of a symbol in the slot in which the first time domain symbol is located. It may be understood that the network device may first send the third indication information to the second terminal device, and then send the first signal to the second terminal device.

Optionally, when the method 500 may be combined with the method 700, the method 700 may further include: The network device sends fourth indication information to the second terminal device, and the second terminal device receives the fourth indication information. The fourth indication information indicates a first comb value M and a first comb offset value that are in frequency domain and that correspond to the L REs. The first comb offset value ranges from 0 to (M-1). Optionally, the network device may send the fourth indication information to the second terminal device by using DCI, a MAC CE, or RRC signaling. The second terminal device determines frequency domain locations of the L REs based on the first comb value M and the first comb offset value that are indicated by the fourth indication information, sets, as blank REs, the (L-P) REs that are in the L REs and that belong to a frequency band of the second terminal device, and demodulates the first signal based on the blank REs. In other words, the second terminal device needs to determine which REs are blank REs, and demodulates the first signal based on the blank REs.

It may be understood that a sequence in which the network device sends the first signal and the fourth indication information to the second terminal device is not limited, and the network device may send the first signal and the fourth indication information to the second terminal device simultaneously or in sequence.

Optionally, when the network device sends the third indication information and the fourth indication information to the second terminal device, the second terminal device determines the RE other than the P REs in the L REs based on the third indication information and the fourth indication information, and demodulates the first signal based on a determined RE. Optionally, that the second terminal device determines the RE other than the P REs in the L REs based on the third indication information and the fourth indication information includes: The second terminal device determines the first time domain symbol based on the third indication information, and the second terminal device determines, from the frequency band of the second terminal device based on the fourth indication information, the RE that is other than the P REs in the L REs, that is located on the frequency band of the second terminal device, and that is on the first time domain symbol, and sets these REs as the blank REs. If the network device sends the fourth indication information and the first signal to the second terminal device, the sequence of sending the fourth indication information and the first signal is also not limited.

Optionally, when the method 500 may be combined with the method 700, the method 700 further includes: The network device sends fifth indication information to the second terminal device. The fifth indication information indicates that no signal is mapped on the RE other than the P REs in the L REs or that punctuation is performed on the RE other than the P REs in the L REs. The second terminal device may demodulate the first signal based on the fifth indication information. Optionally, the network device may send the fifth indication information to the second terminal device by using DCI, a MAC CE, or RRC signaling. In other words, the network device needs to indicate, to the second terminal device, an implementation in which no signal is sent on the RE other than the P REs in the L REs. In this case, the second terminal device may demodulate the first signal from the network device based on the implementation in which no signal is sent on the RE other than the P REs in the L REs. Optionally, when the network device sends the third indication information and the fifth indication information to the second terminal device, the second terminal device demodulates the first signal based on the third indication information and the fifth indication information. Optionally, that the second terminal device demodulates the first signal based on the third indication information and the fifth indication information includes: The second terminal device determines the first time domain symbol based on the third indication information, and determines, based on the fifth indication information, an implementation of an RE on which no signal is sent on the first time domain symbol, to demodulate the first signal on the first time domain symbol. Optionally, when the network device sends the fourth indication information and the fifth indication information to the second terminal device, the second terminal device demodulates the first signal based on the fourth indication information and the fifth indication information. Optionally, that the second terminal device demodulates the first signal based on the fourth indication information and the fifth indication information includes: The second terminal device determines, based on the first comb value M and the first comb offset value that are indicated by the fourth indication information, the (L-P) resource elements that are in the L REs and that belong to the frequency band of the second terminal device, and determines, based on the fifth indication information, the implementation in which no signal is sent on the (L-P) REs, to demodulate the first signal to be sent to the second terminal device. Optionally, when the network device sends the third indication information, the fourth indication information, and the fifth indication information to the second terminal device, the second terminal device demodulates the first signal based on the third indication information, the fourth indication information, and the fifth indication information. Optionally, that the second terminal device demodulates the first signal based on the third indication information, the fourth indication information, and the fifth indication information includes: The second terminal device determines the first time domain symbol based on the third indication information, determines, based on the fourth indication information and the frequency band of the second terminal device, the (L-P) REs that are other than the P REs in the L REs and that are on the first time domain symbol, and determines, based on the fifth indication information, the implementation in which no signal is sent on the (L-P) REs other than the P REs in the L REs, to demodulate the first signal.

It may be understood that a sequence in which the network device sends the first signal and the fifth indication information to the second terminal device is not limited, and the network device may send the first signal and the fifth indication information to the second terminal device simultaneously or in sequence. If the network device sends the fourth indication information and the fifth indication information to the second terminal device, a sequence of sending the fourth indication information and the fifth indication information is also not limited. If the network device sends the fourth indication information and the fifth indication information to the second terminal device, the network device may send a first message to the second terminal device. A first information bit of the first message is for carrying the fourth indication information, and a second information bit of the first message is for carrying the fifth indication information.

Optionally, before S710, the method 700 further includes: The network device sends first indication information to the first terminal device. The first indication information indicates that the $i^{th}$ sampling points in the M*L sampling points corresponding to the M time domain periodicities of the first reference signal sent have the quasi-colocation relationship. In this way, the first terminal device may perform a method 900 based on the first indication information. For example, in embodiments of this application, the manner of sending the sampling points by using the beam in FIG. 8 may be referred to as an "interleaved intra-symbol beam training" manner, and the manner of sending the sampling points in FIG. 4 may be referred to as a "periodic intra-symbol beam training" manner. In FIG. 4, sampling points in a same time domain periodicity have a quasi-colocation relationship, and the network device sends different sampling points in a same time domain periodicity by using a same beam. In this way, the first terminal device needs to measure a sum of energy of sampling points in one time domain periodicity, to determine beam quality. In interleaved intra-symbol beam training in FIG. 8, the first terminal device needs to measure a sum of energy of sampling points that have a quasi-colocation relationship and that are in each time domain periodicity, to determine quality of a beam for sending the sampling points having the quasi-colocation relationship. If a value of a bit corresponding to the first indication information is 1, it indicates that the manner of sending the sampling points by using the beam is the "interleaved intra-symbol beam training" manner. Therefore, the first terminal device measures energy of the beam according to the method 900. If a value of a bit corresponding to the first indication information is 0, it indicates that the manner of sending the sampling points by using the beam is the "periodic intra-symbol beam training" manner. The first terminal device measures the sum of the energy of the sampling points in the time domain periodicity in the manner of sending the sampling points shown in FIG. 4, to determine the beam quality.

Optionally, the network device may determine the first indication information based on current sending behavior. For example, when the network device determines that behavior of sending the first reference signal to the first terminal device on the first time domain symbol is time-divided from behavior of sending, by the network device, the first signal to the another terminal device, or when a beam for the network device to send the first signal to the second terminal device is unrelated to a beam for the network device to send the first reference signal to the first terminal device, the first indication information determined by the network device may indicate "periodic intra-symbol beam training". Otherwise, the first indication information indicates the "interleaved intra-symbol beam training". The another terminal device includes the second terminal device.

Optionally, the network device may send the first indication information to the first terminal device by using DCI, a MAC CE, or radio resource control RRC signaling.

Optionally, when needing to send the first indication information, the second indication information, and the configuration information to the first terminal device, the network device may simultaneously send the first indication information, the second indication information, and the configuration information to the first terminal device, or may separately send the first indication information, the second indication information, and the configuration information to the first terminal device. A sequence of sending the first indication information, the second indication information, and the configuration information is not limited in this embodiment of this application. If the network device simultaneously sends the first indication information, the second indication information, and the configuration information to the first terminal device, the network device may send the first indication information, the second indication information, and the configuration information to the first terminal device before the first time domain symbol.

It should be understood that in the method 700, S720 may not exist, in other words, the network device does not send the first signal to the second terminal device, and by default, no first signal is sent.

It should be noted that in this embodiment of this application, the another terminal device being the second terminal device is used as an example, and the network device sends the first signal to the second terminal device. For behavior of sending, by the network device, another signal to a terminal device other than the second terminal device, refer to the behavior of sending, by the network device, the first signal to the second terminal device.

It should also be noted that the method 700 may be an independent embodiment independent of the method 500, and in this case, the method 700 is an embodiment in which the network device sends sampling points in time domain to the first terminal device and the second terminal device. The method 700 may alternatively be an embodiment dependent of the method 500. This is not limited in this embodiment of this application.

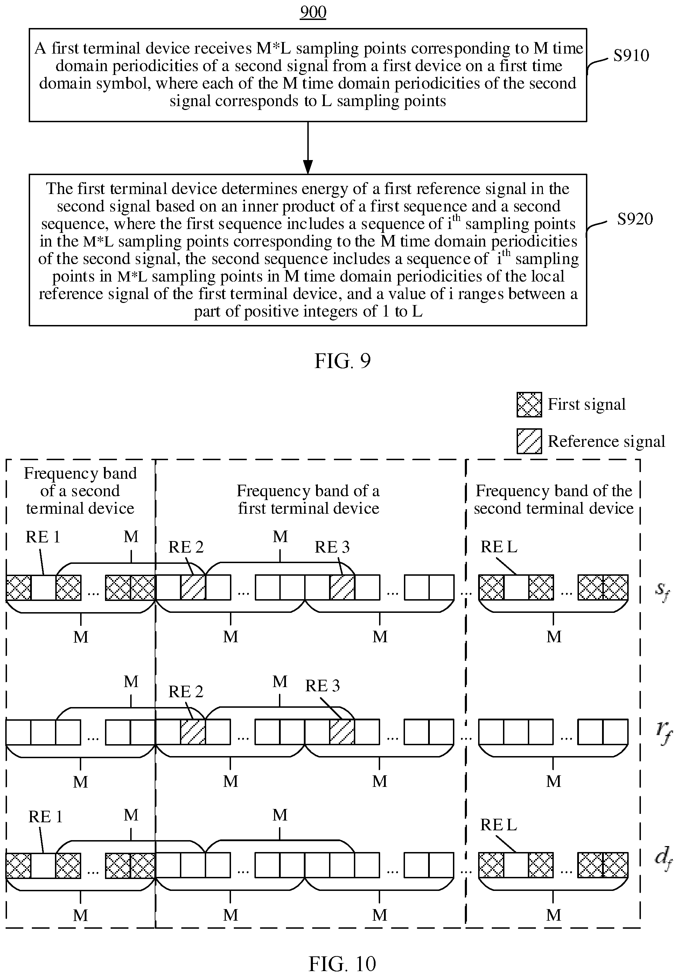

In the method 700, it is described that the network device separately sends the first reference signal to the first terminal device and sends the first signal to the second terminal device. The first terminal device may receive a second signal obtained by mixing the first reference signal with the first signal. The following describes, with reference to the method 900, a process in which a first terminal device processes a signal. As shown in FIG. 9, the method 900 includes the following steps.

S910: The first terminal device receives M*L sampling points corresponding to M time domain periodicities of a second signal from a first device on a first time domain symbol, where each of the M time domain periodicities of the second signal corresponds to L sampling points.

Optionally, the second signal includes a first reference signal sent by a network device to the first terminal device and a first signal sent by the network device to a second terminal device. In other words, the first terminal device may receive both the first reference signal sent by the network device to the first terminal device, and the first signal sent by the network device to the second terminal device. From a perspective of the first terminal device, it is referred to as that the first terminal device receives the second signal on the first time domain symbol. Before receiving processing, the first terminal device cannot separately sense the first signal and the first reference signal that are in the second signal.

Optionally, S910 includes: A terminal device receives, from the network device on the first time domain symbol, the M*L sampling points corresponding to the M time domain periodicities of the second signal by using a fixed beam. In other words, in a process of measuring a transmission beam of the network device, the terminal device receives the sampling points by using the fixed beam. In this way, the measured transmission beam of the network device can be more accurate.

Optionally, before S910, the first terminal device receives second indication information from the network device. The second indication information indicates the first time domain symbol. The first terminal device may determine, based on the second indication information, the first time domain symbol on which intra-symbol beam training is performed. Optionally, the second indication information may directly indicate the first time domain symbol. Optionally, the second indication information specifically indicates a frame index of a frame in which the first time domain symbol is located, a slot index of a slot in the frame in which the first time domain symbol is located, and a symbol index of a symbol in a slot in which the first time domain symbol is located. Optionally, the second indication information specifically indicates a slot offset of the slot in which the first time domain symbol is located relative to a slot in which the network device sends the second indication information, and the symbol index of a symbol in the slot in which the first time domain symbol is located. Optionally, the first terminal device may receive the second indication information by using DCI, a MAC CE, or RRC signaling.

Optionally, the second indication information may indicate the first time domain symbol by indicating a resource index of the first reference signal. A manner of indicating the first time domain symbol is not limited in this embodiment of this application.

Optionally, the network device may configure a time domain resource for training the transmission beam and a time domain resource for training a receive beam of the first terminal device. If the first time domain symbol indicated by the second indication information is the time domain resource for training the transmission beam, the first terminal device determines that the network device needs to train the transmission beam. In this case, the first terminal device may perform S920.

S920: The first terminal device determines energy of the first reference signal in the second signal based on an inner product of a first sequence and a second sequence, where the first sequence includes a sequence of $i^{th}$ sampling points in the M*L sampling points corresponding to the M time domain periodicities of the second signal, the second sequence includes a sequence of $i^{th}$ sampling points in M*L sampling points in the M time domain periodicities of the local first reference signal of the first terminal device, and a value of i ranges between a part of positive integers of 1 to L.

Optionally, the second sequence is orthogonal to a third sequence. The third sequence includes a sequence of $i^{th}$ sampling points in M*L sampling points corresponding to the M time domain periodicities of the first signal in the second signal. Because the second sequence is orthogonal to the third sequence, in a process in which the inner product that is of the first sequence and the second sequence and that is determined by the first terminal device is performed, interference of the first signal in the second signal on the first reference signal to be sent to the first terminal device can be canceled. In this way, the first terminal device may measure, by measuring the first reference signal in the second signal, the transmission beam of the network device.

Optionally, the $i^{th}$ sampling point in the L sampling points corresponding to each time domain periodicity of the second signal is a sampling point that is to be measured by the first terminal device and that is configured by the network device. In other words, even if each time domain periodicity of the second signal includes the L sampling points, the network device may configure the first terminal device to measure a part of the L sampling points corresponding to each time domain periodicity. For example, the first terminal device may receive configuration information from the network device. The configuration information indicates the first terminal device to measure Q sampling points in the L sampling points corresponding to each time domain periodicity of the first reference signal. Q is a positive integer less than or equal to L. Optionally, the first terminal device may receive the configuration information by using DCI, a MAC CE, or RRC signaling. Similar to a manner in which the network device sends the configuration information in the method 700, the first terminal device may perform measurement based on the configuration information. Optionally, the first terminal device may determine, based on the configuration information, a quantity of quasi-colocation relationships in total. For each quasi-colocation relationship, the first terminal device generates different second sequences of the local first reference signal, determines, based on a first sequence of sampling points corresponding to each quasi-colocation relationship and the locally generated second sequence of the first reference signal, a sum of energy of the sampling points corresponding to each quasi-colocation relationship, and reports measurement information. The following also discusses two cases about a manner in which the first terminal device measures a sampling point based on the configuration information sent by the network device in the method 700.

It should be noted that the configuration information is for configuring the first reference signal to be measured by the first terminal device, but the first terminal device receives the second signal. Measuring the first reference signal by the first terminal device based on the configuration information is actually measuring the received second signal based on the configuration information. Therefore, it may also be understood as that the first terminal device measures, based on the configuration information, Q sampling points in the L sampling points corresponding to each time domain periodicity of the second signal. The Q sampling points include the $i^{th}$ sampling point in S920. The following describes measuring the second signal by the first terminal device.

Case 1: In correspondence to Case 1 in the method 700, the configuration information includes L bits. The configuration information in Case 1 in the method 900 is the same as the configuration information in Case 1 in the method 700. To avoid repetition, details are not described.

In Case 1, after receiving the configuration information, the first terminal device determines a total quantity of quasi-colocation relationships of sampling points configured in the configuration information, and generates, based on the configuration information, several second sequences that correspond to the local first reference signal and that correspond to each quasi-colocation relationship. In addition, the first terminal device further determines several first sequences of the sampling points that correspond to each quasi-colocation relationship and that are in each time domain periodicity of the second signal. The first terminal device may calculate the inner product of the first sequence and the second sequence that correspond to each quasi-colocation relationship, determine the sum of the energy of the sampling points in each quasi-colocation relationship, and report the measurement information. For example, the first sequence includes a sequence of $i^{th}$ sampling points in M*Q sampling points corresponding to the M time domain periodicity of the second signal. The second sequence includes $i^{th}$ sampling points in M*Q sampling points corresponding to the M time domain periodicities of the local first reference signal of the first terminal device. For example, the L bits included in the configuration information are 11001100, L is 8, and Q is 4. After receiving the configuration information, the first terminal device determines that there are two quasi-colocation relationships in total. A first quasi-colocation relationship is a $1^{st}$ sampling point and a $2^{nd}$ sampling point that are in each time domain periodicity of the second signal, and a second quasi-colocation relationship is a $5^{th}$ sampling point and a $6^{th}$ sampling point that are in each time domain periodicity of the second signal. Time corresponding to a $3^{rd}$ sampling point, a $4^{th}$ sampling point, a $7^{th}$ sampling point, and an $8^{th}$ sampling point that are in each time domain periodicity of the second signal is time required by the network device to switch the beam. The first terminal device does not measure these sampling points. The first terminal device generates, based on a $1^{st}$ sampling point and a $2^{nd}$ sampling point that are in each time domain periodicity of the local first reference signal, a sequence 1 corresponding to the first quasi-colocation relationship, and generates, based on a $5^{th}$ sampling point and a $6^{th}$ sampling point that are in each time domain periodicity of the local first reference signal, a sequence 2 corresponding to the second quasi-colocation relationship. The first terminal device generates a sequence 3 based on the $1^{st}$ sampling point and the $2^{nd}$ sampling point that are in each time domain periodicity of the second signal, and generates a sequence 4 based on the $5^{th}$ sampling point and the $6^{th}$ sampling point that are in each time domain periodicity of the second signal. The first terminal device obtains, by dividing an inner product of the sequence 1 and the sequence 3 by an inner product of the sequence 1 and the sequence 1, a sum A1 of energy corresponding to the first quasi-colocation relationship, and obtains, by dividing an inner product of the sequence 2 and the sequence 4 by an inner product of the sequence 2 and the sequence 2, a sum A2 of energy corresponding to the second quasi-colocation relationship. The sum A1 of the energy represents quality of a beam for the network device to send sampling points in the first quasi-colocation relationship, and the sum A2 of the energy represents quality of a beam for the network device to send sampling points in the second quasi-colocation relationship.

Optionally, after determining the energy corresponding to each quasi-colocation relationship, the first terminal device sends, to the network device, first measurement information corresponding to the first time domain symbol. The first measurement information includes L bits. The L bits included in the first measurement information are in one-to-one correspondence with the L sampling points corresponding to each time domain periodicity of the first reference signal. The first terminal device determines, in the energy corresponding to each quasi-colocation relationship, a target quasi-colocation relationship of which a sum of energy is greater than a preset value, and sets, to a third value, a bit that is in the L bits included in the first measurement information and that corresponds to a sampling point corresponding to the target quasi-colocation relationship. The first terminal device sets, to a fourth value, a bit that is in the L bits included in the first measurement information and that corresponds to a remaining sampling point. In combination with the foregoing example, if the sum A1 of the energy is greater than the preset value, and the sum A2 of the energy is less than the preset value, the L bits included in the first measurement information are 11000000.

Optionally, the first measurement information may be information obtained by the first terminal device through measurement on the first time domain symbol. Therefore, the first terminal device may send, to the network device, the first measurement information and indication information indicating the first time domain symbol. In this way, the network device may determine, based on the indication information, that the first measurement information is measurement information on the first time domain symbol. Optionally, the indication information may directly indicate the first time domain symbol, or may indicate the first time domain symbol by indicating the resource index of the first reference signal.

Optionally, after determining the energy corresponding to each quasi-colocation relationship, the first terminal device sends third measurement information to the network device. The third measurement information includes the energy corresponding to each quasi-colocation relationship. In combination with the foregoing example, the third measurement information includes the sum A1 of the energy and the sum A2 of the energy.

Optionally, F bit locations in the third measurement information are in one-to-one correspondence with F energy sums obtained based on sampling points in F quasi-colocation relationships. After obtaining the F energy sums by measuring the sampling points in the F quasi-colocation relationships, the first terminal device includes the F energy sums in the F bit locations in the third measurement information respectively. The F bit locations are in one-to-one correspondence with the F quasi-colocation relationships. After receiving the third measurement information, the network device determines, based on the F bit locations, the F energy sums that are in one-to-one correspondence with the F quasi-colocation relationships, to determine a maximum energy sum in the F energy sums. A beam for sending a group of sampling points corresponding to the maximum energy sum is a first target beam.

Optionally, H bit locations in the third measurement information are in one-to-one correspondence with H energy sums. The H energy sums are respectively carried in the H bit locations in the third measurement information. The H bit locations are in one-to-one correspondence with H quasi-colocation relationships. After receiving the third measurement information, the network device determines, based on the H bit locations, the H energy sums that are in one-to-one correspondence with the H quasi-colocation relationships, to determine a maximum energy sum in the H energy sums. A beam for sending a group of sampling points corresponding to the maximum energy sum is a first target beam.

Optionally, the third measurement information may be information obtained by the first terminal device through measurement on the first time domain symbol. Therefore, the first terminal device may send, to the network device, the third measurement information and indication information indicating the first time domain symbol. In this way, the network device may determine, based on the indication information, that the third measurement information is measurement information on the first time domain symbol. Optionally, the indication information may directly indicate the first time domain symbol, or may indicate the first time domain symbol by indicating the resource index of the first reference signal.

Case 2: In correspondence to Case 2 in the method 700, the configuration information includes Q indexes, and the Q indexes are in one-to-one correspondence with the Q sampling points. The configuration information in Case 2 in the method 900 is the same as the configuration information in Case 2 in the method 700. To avoid repetition, details are not described.

In Case 2, after receiving the configuration information, the first terminal device determines a total quantity of quasi-colocation relationships of sampling points configured in the configuration information, and generates, based on the configuration information, several second sequences that correspond to the local first reference signal and that correspond to each quasi-colocation relationship. In addition, the first terminal device further determines several first sequences of the sampling points that correspond to each quasi-colocation relationship and that are in each time domain periodicity of the second signal. The first terminal device may determine the inner product of the first sequence and the second sequence that correspond to each quasi-colocation relationship, determine the sum of the energy of the sampling points in each quasi-colocation relationship, and report the measurement information. For example, the first sequence includes a sequence of $i^{th}$ sampling points in M*Q sampling points in the M time domain periodicities of the second signal. The second sequence includes $i^{th}$ sampling points in M*Q sampling points in the M time domain periodicities of the local first reference signal of the first terminal device. For example, the Q indexes included in the configuration information are 0, 1, 4, and 5, and Q is 4. 0 represents that the first terminal device measures a $1^{st}$ sampling point in each time domain periodicity, 1 represents that the first terminal device measures a $2^{nd}$ sampling point in each time domain periodicity, 4 represents that the first terminal device measures a $5^{th}$ sampling point in each time domain periodicity, and 5 represents that the first terminal device measures a $6^{th}$ sampling point in each time domain periodicity. Because indexes 0 and 1 are consecutive, and indexes 4 and 5 are consecutive, the first terminal device determines that there are two quasi-colocation relationships in total. The first quasi-colocation relationship is a $1^{st}$ sampling point and a $2^{nd}$ sampling point that are in each time domain periodicity of the second signal, and the second quasi-colocation relationship is a $5^{th}$ sampling point and a $6^{th}$ sampling point that are in each time domain periodicity of the second signal. The first terminal device generates, based on a $1^{st}$ sampling point and a $2^{nd}$ sampling point that are in each time domain periodicity of the local first reference signal, a sequence 1 corresponding to the first quasi-colocation relationship, and generates, based on a $5^{th}$ sampling point and a $6^{th}$ sampling point that are in each time domain periodicity of the local first reference signal, a sequence 2 corresponding to the second quasi-colocation relationship. The first terminal device generates a sequence 3 based on the $1^{st}$ sampling point and the $2^{nd}$ sampling point that are in each time domain periodicity of the second signal, and generates a sequence 4 based on the $5^{th}$ sampling point and the $6^{th}$ sampling point that are in each time domain periodicity of the second signal. The first terminal device obtains, by dividing an inner product of the sequence 1 and the sequence 3 by an inner product of the sequence 1 and the sequence 1, a sum A1 of energy corresponding to the first quasi-colocation relationship, and obtains, by dividing an inner product of the sequence 2 and the sequence 4 by an inner product of the sequence 2 and the sequence 2, a sum A2 of energy corresponding to the second quasi-colocation relationship. The sum A1 of the energy represents quality of a beam for the network device to send sampling points in the first quasi-colocation relationship, and the sum A2 of the energy represents quality of a beam for the network device to send sampling points in the second quasi-colocation relationship.

Optionally, after determining the energy sum corresponding to each quasi-colocation relationship, the first terminal device determines one or more quasi-colocation relationships of which energy sums are greater than a preset value, and sends second measurement information to the network device. The second measurement information indicates a target index. The Q indexes include the target index. A sum of energy of sampling points that have a quasi-colocation relationship with a sampling point indicated by the target index is greater than the preset value. There may be one or more target indexes. Optionally, the second measurement information may directly or indirectly indicate the target index. For example, the second measurement information may indicate an interval segment of the target index. In combination with the foregoing example, if the sum A1 of the energy is greater than the preset value, and the sum A2 of the energy is less than the preset value, the Q indexes indicated by the second measurement information are 0 and 1, and the second measurement information may directly indicate 0 and 1, or indicate 0-1. 0-1 represents that a sum of energy of all sampling points between a sampling point corresponding to an index 0 and a sampling point corresponding to an index 1 is greater than the preset value.

Optionally, the second measurement information may be information obtained by the first terminal device through measurement on the first time domain symbol. Therefore, the first terminal device may send, to the network device, the second measurement information and indication information indicating the first time domain symbol. In this way, the network device may determine, based on the indication information, that the second measurement information is measurement information on the first time domain symbol. Optionally, the indication information may directly indicate the first time domain symbol, or may indicate the first time domain symbol by indicating the resource index of the first reference signal.

Optionally, after determining the energy corresponding to each quasi-colocation relationship of the first reference signal in the second signal, the first terminal device sends third measurement information to the network device. The third measurement information includes the energy corresponding to each quasi-colocation relationship. In combination with the foregoing example, the third measurement information includes the sum A1 of the energy and the sum A2 of the energy.

Optionally, F bit locations in the third measurement information are in one-to-one correspondence with F energy sums obtained based on sampling points in the F quasi-colocation relationships. After obtaining the F energy sums by measuring the sampling points in the F quasi-colocation relationships, the first terminal device includes the F energy sums in the F bit locations in the third measurement information respectively. The F bit locations are in one-to-one correspondence with the F quasi-colocation relationships. After receiving the third measurement information, the network device determines, based on the F bit locations, the F energy sums that are in one-to-one correspondence with the F quasi-colocation relationships, to determine a maximum energy sum in the F energy sums. A beam for sending a group of sampling points corresponding to the maximum energy sum is a first target beam.

Optionally, H bit locations in the third measurement information are in one-to-one correspondence with H energy sums. The H energy sums are respectively carried in the H bit locations in the third measurement information. The H bit locations are in one-to-one correspondence with H quasi-colocation relationships. After receiving the third measurement information, the network device determines, based on the H bit locations, the H energy sums that are in one-to-one correspondence with the H quasi-colocation relationships, to determine a maximum energy sum in the H energy sums. A beam for sending a group of sampling points corresponding to the maximum energy sum is a first target beam.

Optionally, the third measurement information may be information obtained by the first terminal device through measurement on the first time domain symbol. Therefore, the first terminal device may send, to the network device, the third measurement information and indication information indicating the first time domain symbol. In this way, the network device may determine, based on the indication information, that the third measurement information is measurement information on the first time domain symbol. Optionally, the indication information may directly indicate the first time domain symbol, or may indicate the first time domain symbol by indicating the resource index of the first reference signal.

It should be understood that in a process in which the first terminal device determines the energy of the first reference signal in the second signal, the first terminal device can learn of the first reference signal sent by the network device. In other words, the first terminal device locally stores the first reference signal. After the first terminal device receives the second signal, in a process in which the first terminal device performs an inner product by using the sequence of the $i^{th}$ sampling points in the M time domain periodicities of the second signal and the sequence of the $i^{th}$ sampling points in the M time domain periodicities of the locally stored first reference signal, the interference of the first signal on the first reference signal can be canceled, so that the energy that is of the first reference signal and that is determined by the first terminal device can be accurate.

It should be noted that when the method 500 may be combined with the method 900, the P REs in the L REs in the method 500 are for mapping the first reference signal, and no signal is sent on the RE other than the P REs in the L REs in the method 500. The network device may map the first signal on an RE that is on a frequency band of another terminal device and that is other than the foregoing (L-P) REs. The (L-P) REs are REs other than P REs in L REs. The another terminal device includes the second terminal device. In this design, the second sequence of the $i^{th}$ sampling points in the M*L sampling points corresponding to the M time domain periodicities of the first reference signal in time domain can be orthogonal to the third sequence of the $i^{th}$ sampling points in the M*L sampling points corresponding to the M time domain periodicities of the first signal. However, in an actual processing process, the first terminal device does not sense the third sequence.

For understanding of the solution, the following describes, with reference to FIG. 10, that a second sequence is orthogonal to a third sequence. As shown in FIG. 10, in a design in the method 500, a network device maps a first reference signal on a frequency band of a first terminal device at an interval of M REs, for example, an RE 2 and an RE 3 in FIG. 10. The network device sets a blank RE, for example, an RE 1 and an RE L, at an interval of M REs on a frequency band of a second terminal device. The network device sends a first signal to the second terminal device on an RE that is other than the blank RE and that is on the frequency band of the second terminal device. The first terminal device may receive both the first reference signal $r_f$ sent by the network device to the first terminal device, and the first signal $d_f$ sent by the network device to the second terminal device. Therefore, in mathematics, a second signal $s_f$ that is in frequency domain and that is received by the first terminal device may be decomposed into the first signal $d_f$ and the first reference signal $r_f$, that is $s_f = d_f + r_f$. In other words, the second signal is a signal obtained by adding the first signal and the first reference signal. $r_f$ may be understood as a sequence of the first reference signal that is in frequency domain and that is sent by the network device to the first terminal device. $r_f$ is for zero padding at an RE location corresponding to the frequency band of the second terminal device. $d_f$ may be understood as a sequence of the first signal that is in frequency domain and that is sent by the network device to the second terminal device. $d_f$ is for zero padding at an RE location corresponding to the frequency band of the first terminal device. In this case, it is equivalent to that the first terminal device receives the second signal $s_f$ obtained by superposing the first signal and the first reference signal in frequency domain. In frequency domain, lengths of $d_f$, $r_f$ and $s_f$ are the same, for example, are N. It is equivalent to that the frequency band of the first terminal device and the frequency band of the second terminal device occupy N subcarriers in total. L=N/M, that is, L frequency domain rasters exist in total. After sequences $s_f$, $d_f$, and $r_f$ in frequency domain are transformed to time domain, obtained time domain sequences are respectively $s_t$, $d_t$, and $r_t$, where $s_t = d_t + r_t$, $s_t$ may be the foregoing first sequence, $r_t$ may be the foregoing second sequence, and $d_t$ may be the foregoing third sequence. According to a property of the Fourier transform,

$$\sum_{m=0}^{M-1} \mathrm{r}_t^*(mL+i) \times d_t(mL+i) = 0$$

may be obtained, where $i$ is any integer satisfying $0 \le i \le L$.

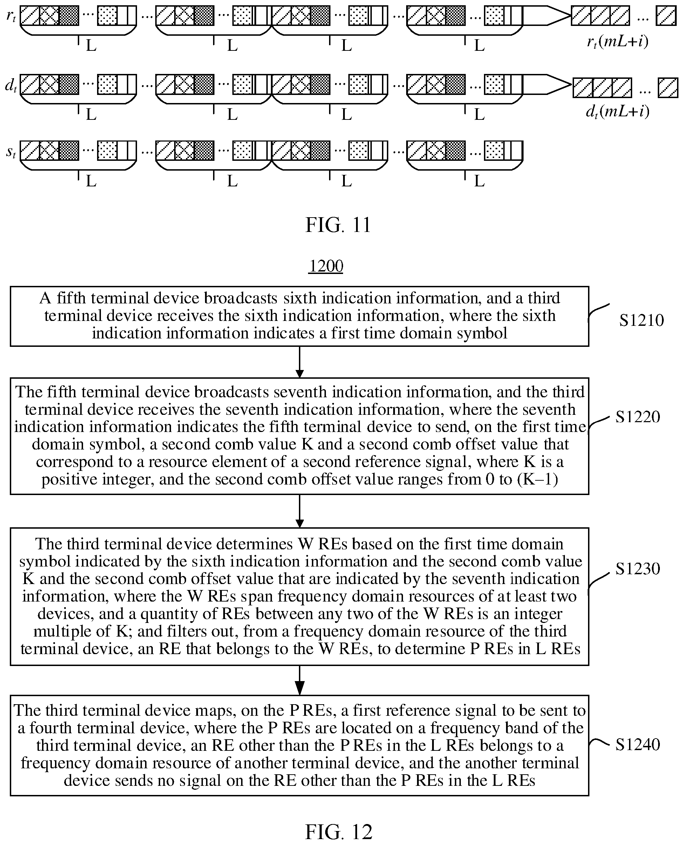

The foregoing formula indicates that $r_t$ and $d_t$ are orthogonal. To be specific, the second sequence is orthogonal to the third sequence. As shown in FIG. 11, a local first reference signal $r_f$ of a first terminal device in frequency domain is transformed to time domain to be $r_t$, a first signal $d_f$ in frequency domain is transformed to time domain to be $d_t$, and a second signal $s_f$ in frequency domain is transformed to time domain to be $s_t$. The first terminal device extracts, as a second sequence $r_t(mL+i)$, a sequence of $i^{th}$ sampling points in M time domain periodicities of the local first reference signal in time domain. The first terminal device extracts, as a first sequence, a sequence of $i^{th}$ sampling points in the M time domain periodicities of the received second signal. The first terminal device performs an inner product operation on the first sequence and the second sequence:

$$\sum_{m=0}^{M-1} \mathrm{r}_t^*(mL+i) \times s_t(mL+i) = \sum_{m=0}^{M-1} \mathrm{r}_t^*(mL+i) \times \left(r_t(mL+i) + d_t(mL+i)\right) = \sum_{m=0}^{M-1} \mathrm{r}_t^*(mL+i) \times r_t(mL+i)$$

. The first terminal device determines energy of the first reference signal in the second signal based on a result of the inner product operation on the first sequence and the second sequence. In this way, the first terminal device can cancel impact of a third sequence $d_t(mL+i)$ of $i^{th}$ sampling points in the M time domain periodicities of the first signal on the energy of the first reference signal, so that beam measurement is more accurate.

Optionally, before S920, the method 900 further includes: The first terminal device receives first indication information from the network device. The first indication information indicates that $i^{th}$ sampling points in M*L sampling points corresponding to M time domain periodicities of the first reference signal sent have a quasi-colocation relationship. Optionally, the first terminal device may receive the first indication information by using DCI, a MAC CE, or RRC signaling. In this way, the first terminal device may perform the method 900 in this embodiment of this application based on the first indication information. For example, in embodiments of this application, the manner of sending the sampling points by using the beam in FIG. 8 may be referred to as the "interleaved intra-symbol beam training" manner, and the manner of sending the sampling points by using the beam in FIG. 4 may be referred to as the "periodic intra-symbol beam training" manner. If the value of the bit corresponding to the first indication information is 1, it indicates that the manner of sending the sampling points by using the beam is the "interleaved intra-symbol beam training" manner. In this case, the first terminal device measures energy of the beam according to the method 900. If the value of the bit corresponding to the first indication information is 0, it indicates that the manner of sending the sampling points by using the beam is the "periodic intra-symbol beam training" manner. The first terminal device measures the sum of the energy of the sampling points in the time domain periodicity in the manner of sending the sampling points shown in FIG. 4, to determine the beam quality.

It should be noted that in embodiments of this application, the first terminal device and the second terminal device are used as examples for description. The first terminal device is a terminal device that receives the first reference signal sent by the network device, and the second terminal device is a terminal device that receives the first signal sent by the network device. The network device needs to determine the P REs on the frequency band or in the frequency domain resource of the first terminal device, determine the (L-P) blank REs on the frequency band or in the frequency domain resource of the second terminal device, and send no signal to the second terminal device on the (L-P) REs. In actual application, the network device may send different signals to more terminal devices (for example, G terminal devices, where G is a positive integer), and send the first reference signal to the first terminal device. The first time domain symbol corresponds to L frequency domain rasters, and each frequency domain raster includes M REs. The network device sets corresponding blank REs on frequency bands or in frequency domain resources of different terminal devices. For example, blank REs respectively set on frequency bands or frequency domain resources of F terminal devices are P1 REs, P2 REs, ..., and PF REs, where P1+P2+...+PF+P=L.

Optionally, the sum of the energy of the sampling points mentioned in the embodiments in FIG. 5 to FIG. 11 may be a sum of normalized energy of sampling points. To be specific, the first terminal device needs to perform normalization processing when calculating a sum of energy of sampling points of the first reference signal. The first terminal device may perform an inner product by using a sequence of sampling points of the received second signal and a sequence of the local first reference signal corresponding to the second signal, and then divide an inner product by an inner product of the sequence of the local first reference signal corresponding to the second signal and the sequence (the sequence of the local first reference signal corresponding to the second signal).

Training the transmission beam of the network device is described in the embodiments in FIG. 5 to FIG. 11. Embodiments of this application are also applicable to training the receive beam of the first terminal device. In a process of training the receive beam of the first terminal device, the network device sends the first reference signal by using a fixed beam, and the first terminal device switches a beam to receive the first reference signal. The first terminal device receives, by using a same beam, sampling points that have the quasi-colocation relationship and that are in each time domain periodicity. The $i^{th}$ sampling points that are in the M*L sampling points corresponding to the M time domain periodicities of the first reference signal and that are sent by the network device have the quasi-colocation relationship. In this way, the first terminal device measures the energy of the first reference signal, and determines a second target beam in the receive beam based on the energy of the first reference signal. To avoid repetition, a process of determining the second target beam is not described in detail in embodiments of this application. Optionally, in the process in which the receive beam of the first terminal device is trained, if the first time domain symbol indicated by second indication information is a corresponding time domain symbol for training the receive beam, the network device needs to send the first indication information and the second indication information to the first terminal device before the first time domain symbol.

The foregoing describes the method in a process of communication between the network device and the terminal device. Embodiments of this application are also applicable to a D2D scenario. The following describes a method 1200 in the D2D scenario with reference to FIG. 12. In the method 1200, a first device may be a third terminal device, a second device may be a fourth terminal device, and a fourth device may be a fifth terminal device. As shown in FIG. 12, the method 1200 includes the following steps.

S1210: The fifth terminal device broadcasts sixth indication information, and the third terminal device receives the sixth indication information, where the sixth indication information indicates a first time domain symbol.

Optionally, the sixth indication information specifically indicates a frame index of a frame in which the first time domain symbol is located, a slot index of a slot in the frame in which the first time domain symbol is located, and a symbol index of a symbol in a slot in which the first time domain symbol is located. Optionally, the sixth indication information specifically indicates a slot offset of the slot in which the first time domain symbol is located relative to a slot in which the fifth terminal device sends the sixth indication information, and the symbol index of a symbol in the slot in which the first time domain symbol is located.

Optionally, the first time domain symbol may be a first OFDM symbol.

Optionally, the fifth terminal device may send the sixth indication information in a MAC CE, RRC signaling, or second-stage sidelink control information (sidelink control information, SCI 2) by using a broadcast message.

S 1220: The fifth terminal device broadcasts seventh indication information, and the third terminal device receives the seventh indication information, where the seventh indication information indicates the fifth terminal device to send, on the first time domain symbol, a second comb value K and a second comb offset value that correspond to a resource element of a second reference signal, K is a positive integer, and the second comb offset value ranges from 0 to (K-1).

REs corresponding to the first time domain symbol are M*L REs, (M*L)/K may also be referred to as a quantity of frequency domain rasters, and each frequency domain raster includes K REs. In other words, the first time domain symbol corresponds to the M*L REs. For the third terminal device, the M*L REs may be L frequency domain rasters. Each frequency domain raster includes M REs. For the fifth terminal device, the M*L REs may be (M*L)/K frequency domain rasters. Each frequency domain raster includes K REs.

Optionally, a first comb value M and the second comb value K may be the same or different. This is not limited in this embodiment of this application.

Optionally, a first comb offset value and the second comb offset value may be the same or different. This is not limited in this embodiment of this application.

Before S 1220, the fifth terminal device determines W frequency domain rasters on the first time domain symbol. Each frequency domain raster includes K REs. The fifth terminal device determines one RE in each frequency domain raster. In this way, each of W REs is from one frequency domain raster, and a quantity of REs between any two of the W REs is an integer multiple of K. For example, any two of the W REs are separated by K REs, 2K REs, or 3K REs, where K and W are positive integers.

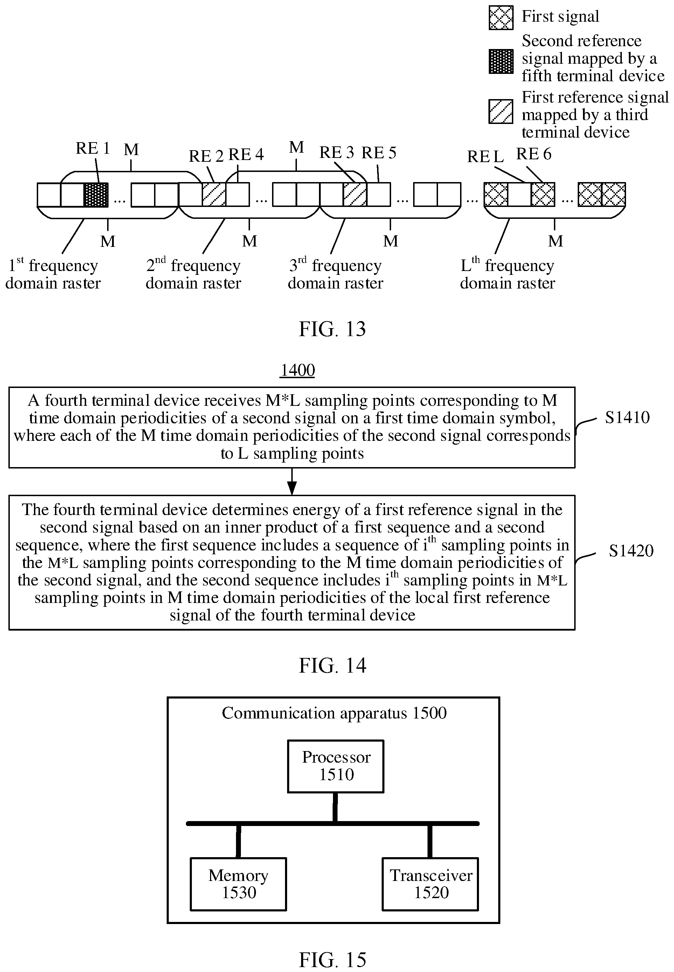

Optionally, the second comb value K is equal to a quantity of REs included in one frequency domain raster. Each of the W REs belongs to one frequency domain raster, and second comb offset values of the W REs in respective frequency domain rasters are the same. For example, as shown in FIG. 13, a first comb value M is the same as a second comb value K, a frequency domain resource of a 1st frequency domain raster is located in a frequency domain resource or on a frequency band of the fifth terminal device, the W REs include an RE 1, and comb offset values of the W REs in respective frequency domain rasters are 2. In other words, the fifth terminal device maps, on a 3rd RE of the 1st frequency domain raster, the second reference signal to be sent by the fifth terminal device.

Optionally, the fifth terminal device may send seventh indication information in a MAC CE, RRC signaling, or SCI 2 by using a broadcast message.

It should be noted that the second reference signal mapped by the fifth terminal device may be to be sent to another terminal device for training a transmission beam of the fifth terminal device or a receive beam of the another terminal device. For example, the second reference signal mapped by the fifth terminal device may be to be sent to a sixth terminal device, the third terminal device, the fourth terminal device, or the like. A terminal device that trains a beam with the fifth terminal device is not limited in this embodiment of this application.

Optionally, the fifth terminal device may simultaneously broadcast the sixth indication information and the seventh indication information in a same broadcast message. The third terminal device may obtain the sixth indication information and the seventh indication information from a same broadcast message. Optionally, the fifth terminal device may broadcast the sixth indication information and the seventh indication information in different broadcast messages. The third terminal device may obtain the sixth indication information and the seventh indication information from different broadcast messages. In other words, a sequence of S 1210 and S 1220 is not limited in this embodiment of this application.

Optionally, the sixth indication information and/or the seventh indication information may further indicate an identifier of a peer terminal device that performs intra-symbol beam training. In this way, a terminal device that receives the broadcast message may determine, based on the identifier, that beam training needs to be performed with the fifth terminal device. For example, the sixth indication information and/or the seventh indication information indicate/indicates an identifier of the sixth terminal device. If receiving the sixth indication information and/or the seventh indication information, the third terminal device determines, based on the identifier of the sixth terminal device, that the beam training does not need to be performed with the fifth terminal device. In other words, the third terminal device does not need to receive the second reference signal sent by the fifth terminal device.

Optionally, if receiving the sixth indication information and/or the seventh indication information, and needing to send a first signal to a tenth terminal device, a ninth terminal device needs to determine the first time domain symbol based on the sixth indication information, and needs to determine the W REs based on the second comb value K and the second comb offset value that are indicated by the seventh indication information. If S REs in the W REs belong to a frequency band of the ninth terminal device, the ninth terminal device sets corresponding S REs as blank REs when sending the first signal. S is a positive integer less than W, and W is a positive integer. In this way, when sending the first signal, the ninth terminal device sends no signal on the S REs. If the ninth terminal device that receives the broadcast message sends no signal, no operation is performed. Optionally, the tenth terminal device may receive, from the ninth terminal device, indication information indicating the first time domain symbol, the second comb value K, and the second comb offset value. Alternatively, the tenth terminal device may directly determine the first time domain symbol from the sixth indication information in the broadcast message of the fifth terminal device, and determine the second comb value K and the second comb offset value based on the seventh indication information in the broadcast message, to determine the W REs based on the sixth indication information and the seventh indication information. The tenth terminal device may determine the S REs that belong to the frequency band of the ninth terminal device, and determine the S REs as the blank REs, to demodulate the first signal from the ninth terminal device based on the blank REs.

Optionally, before S1230, the third terminal device determines whether the beam training needs to be performed on the first time domain symbol. If the third terminal device determines that the beam training needs to be performed on the first time domain symbol, S1220 is performed; otherwise, S1220 is not performed. For example, if the third terminal device needs to perform beam training on a second time domain symbol, S1220 is not performed, but P REs are determined on the second time domain symbol. A quantity of REs between any two of the PREs is an integer multiple of M. A first reference signal is mapped on the P REs on the second time domain symbol, and is sent to the fourth terminal device.

S1230: The third terminal device determines the W REs based on the first time domain symbol indicated by the sixth indication information and the second comb value K and the second comb offset value that are indicated by the seventh indication information, where the W REs span frequency domain resources of at least two devices, and a quantity of REs between any two of the W REs is an integer multiple of K; and filters out, from a frequency domain resource of the third terminal device, an RE that belongs to the W REs, to determine the P REs in L REs.

In other words, before mapping the first reference signal to be sent to the fourth terminal device, the third terminal device needs to filter out, in a frequency domain resource or on a frequency band of the fourth terminal device, an RE associated with an RE on which the another terminal device maps the second reference signal. In other words, it needs to be ensured that the RE on which the another terminal device maps the second reference signal does not interfere with the first reference signal mapped by the third terminal device. For example, as shown in FIG. 13, the third terminal device determines the W REs based on the second comb value K (K=M) and the second comb offset value 2. The RE 1 in the $1^{st}$ frequency domain raster is an RE on which the fifth terminal device maps the second reference signal. A frequency band of the sixth terminal device occupies the $1^{st}$ frequency domain raster. The frequency band of the fourth terminal device occupies a $2^{nd}$ frequency domain raster and a $3^{rd}$ frequency domain raster. Because an RE 4 and an RE 5 belong to the W REs, the third terminal device needs to filter out the RE 4 and the RE 5, to determine that the P REs are an RE 2 and an RE 3.

Optionally, the third terminal device may further send third indication information. The third indication information indicates the first time domain symbol. Optionally, the third terminal device may send a broadcast message. The broadcast message includes the third indication information. Optionally, the third indication information may further indicate an identifier of the fourth terminal device. Optionally, the third terminal device may send the third indication information to the fourth terminal device. Optionally, the third indication information specifically indicates the frame index of the frame in which the first time domain symbol is located, the slot index of the slot in the frame in which the first time domain symbol is located, and the symbol index of a symbol in the slot in which the first time domain symbol is located. Optionally, the third indication information specifically indicates a slot offset of the slot in which the first time domain symbol is located relative to a slot in which the third terminal device sends the third indication information, and the symbol index of a symbol in the slot in which the first time domain symbol is located.

Optionally, the third terminal device may further send fourth indication information. The fourth indication information indicates the first comb value M and the first comb offset value. Optionally, the third terminal device may send a broadcast message. The broadcast message includes the fourth indication information.

Optionally, the third terminal device may broadcast the third indication information and the fourth indication information in different broadcast messages.

Optionally, the third terminal device may broadcast the third indication information and the fourth indication information in a same broadcast message. If a seventh terminal device that receives the broadcast message needs to send the first signal on the first time domain symbol indicated by the third indication information, the seventh terminal device needs to determine the L REs based on the first comb value M and the first comb offset value that are indicated by the fourth indication information. If (L-P) REs in the L REs belong to a frequency band of the seventh terminal device, the seventh terminal device sets corresponding (L-P) REs as blank REs when sending the first signal. For descriptions of the blank RE, refer to the descriptions of the (L-P) REs in the method 500. In this way, when sending the first signal, the seventh terminal device sends no signal on the (L-P) REs. If the seventh terminal device that receives the broadcast message sends no signal, no operation is performed. For example, as shown in FIG. 13, REs in the $L^{th}$ frequency domain raster are the frequency band or a frequency domain resource of the seventh terminal device, and a quantity of REs between an RE L and the RE 3 or the RE 2 is an integer multiple of M. The seventh terminal device sends no signal on the RE L, to avoid interference on sending of the first reference signal by the third terminal device on the RE 2 and the RE 3.

In other words, in the method 1200, in a process in which the third terminal device and the fourth terminal device train a beam, because there is no central scheduling node, the third terminal device needs to receive the sixth indication information and the seventh indication information in the broadcast message of the another terminal device (the fifth terminal device), to determine an RE on which the another terminal device may map a reference signal. When mapping the first reference signal to be sent to the fourth terminal device, the third terminal device needs to filter out the RE on which the another terminal device maps the reference signal, to avoid a case that the reference signal mapped by the another terminal device interferes with a reference signal sent by the third terminal device to the first terminal device. In this case, a method for determining the P REs by the third terminal device in a scenario in which there is no central scheduling node can be implemented.

S1240: The third terminal device maps, on the P REs, the first reference signal to be sent to the fourth terminal device, where the P REs are located on a frequency band of the third terminal device, an RE other than the P REs in the L REs belongs to a frequency domain resource of the another terminal device, and the another terminal device sends no signal on the RE other than the P REs in the L REs.

It may be understood that the P REs may alternatively be understood as the frequency band of the fourth terminal device. In other words, a frequency band used by the third terminal device and the fourth terminal device in a communication process may be understood as the frequency band of the third terminal device or the frequency band of the fourth terminal device. This is not limited in this embodiment of this application.

Specifically, the third terminal device mapping the first reference signal to be sent to the first terminal device in S 1240 is similar to the network device mapping the first reference signal to be sent to the first terminal device in S520. To avoid repetition, details are not described.

Optionally, the L REs span frequency domain resources of at least two devices. The P REs belong to the frequency domain resource of the fourth terminal device. The (L-P) REs include a frequency domain resource of the seventh terminal device.

In the method 1200, a signal processing method is provided. The third terminal device may determine the P REs based on the received sixth indication information and the received seventh indication information that are sent by the fifth terminal device, and map, on the PREs, the first reference signal to be sent to the fourth terminal device. A quantity of REs between any two of the P REs is an integer multiple of M. The fourth terminal device may measure different sampling points that are of the first reference signal in time domain, to measure different beams. This can improve beam measurement accuracy, and can train a plurality of beams on one time domain symbol, so that resource overheads can be reduced. In addition, the third terminal device may send the third indication information and the fourth indication information. If the seventh terminal device that receives the third indication information and the fourth indication information needs to send the first signal on the first time domain symbol, the seventh terminal device needs to determine the L REs based on the first comb value M and the first comb offset value. If the (L-P) REs in the L REs belong to the frequency band of the seventh terminal device, the seventh terminal device sets the corresponding (L-P) REs as the blank REs when sending the first signal. In this way, when sending the first signal, the seventh terminal device sends no signal on the (L-P) REs. The seventh terminal device may send the first signal on an RE other than the (L-P) blank REs on which no signal is sent. This can also avoid a case that the first signal sent by the seventh terminal device interferes with the first reference signal sent by the third terminal device to the fourth terminal device, and can also improve flexibility of resource scheduling. If the seventh terminal device that receives the third indication information and the fourth indication information sends no signal, no operation is performed.

After mapping, according to the method 1200, the first reference signal to be sent to the fourth terminal device, the third terminal device may send, in time domain, a sampling point corresponding to the first reference signal. The following describes a process in which the third terminal device sends the sampling point corresponding to the first reference signal, and the fourth terminal device measures the sampling point corresponding to the first reference signal. The third terminal device sends M*L sampling points corresponding to M time domain periodicities of the first reference signal to the fourth terminal device on the first time domain symbol. Each of the M time domain periodicities of the first reference signal corresponds to L sampling points. $i^{th}$ sampling points in the M*L sampling points corresponding to the M time domain periodicities have a quasi-colocation relationship. A value of i is a positive integer ranging from 1 to L.

Specifically, a method for the third terminal device to send the M*L sampling points corresponding to the M time domain periodicities of the first reference signal to the fourth terminal device is similar to the method for the network device to send the M*L sampling points corresponding to the M time domain periodicities of the first reference signal to the first terminal device in S710. For example, the network device sends the configuration information to the first terminal device in S710, and the third terminal device may also send configuration information to the fourth terminal device in the method 1200. The fourth terminal device measures the first reference signal based on the configuration information and performs reporting. The third terminal device determines a target beam based on measurement information reported by the fourth terminal device. To avoid repetition, details are not described.

Optionally, if the seventh terminal device that receives the third indication information and the fourth indication information needs to send the first signal on the first time domain symbol, the seventh terminal device needs to determine the L REs based on the first comb value M and the first comb offset value. If the (L-P) REs in the L REs belong to the frequency band of the seventh terminal device, the seventh terminal device sets the corresponding (L-P) REs as the blank REs when sending the first signal. For descriptions of the blank RE, refer to the descriptions of the (L-P) REs in the method 500. In this way, when sending the first signal, the seventh terminal device sends no signal on the (L-P) REs. The seventh terminal device sends, in time domain, the first signal to an eighth terminal device on the first time domain symbol. M time domain periodicities of the first signal correspond to M*L sampling points. Each of the M time domain periodicities of the first signal corresponds to L sampling points. For a method for the seventh terminal device to send the first signal to the eighth terminal device, refer to the method for the network device to send the first signal to the second terminal device in S720. To avoid repetition, details are not described. If the seventh terminal device that receives the third indication information and the fourth indication information sends no signal, no operation is performed.

According to the method 1200, it is described that the third terminal device sends the first reference signal to the fourth terminal device, the seventh terminal device sends the first signal to the eighth terminal device, or the ninth terminal device sends the first signal to the tenth terminal device. The fourth terminal device may receive a second signal obtained by mixing the first reference signal with the first signal. The following describes, with reference to a method 1400 in FIG. 14, a processing in which a fourth terminal device processes a signal.

S1410: The fourth terminal device receives M*L sampling points corresponding to M time domain periodicities of a second signal on a first time domain symbol, where each of the M time domain periodicities of the second signal corresponds to L sampling points.

The fourth terminal device in S1410 is similar to the first terminal device in S910. For a process performed by the fourth terminal device in S1410, refer to the process performed by the first terminal device in S910. To avoid repetition, details are not described.

Optionally, the fourth terminal device may receive third indication information that is directionally sent by a third terminal device to the fourth terminal device, and determine the first time domain symbol based on the third indication information. Optionally, the fourth terminal device may receive the third indication information broadcast by the third terminal device in a broadcast message. The third indication information may further indicate an identifier of the fourth terminal device. The fourth terminal device determines, based on the identifier of the fourth terminal device, that the first time domain symbol indicated by the third indication information is a time domain symbol used by the third terminal device to train a transmission beam.

S1420: The fourth terminal device determines energy of a first reference signal in the second signal based on an inner product of a first sequence and a second sequence, where the first sequence includes a sequence of $i^{th}$ sampling points in the M*L sampling points corresponding to the M time domain periodicities of the second signal, and the second sequence includes $i^{th}$ sampling points in M*L sampling points in M time domain periodicities of the local first reference signal of the fourth terminal device.

The fourth terminal device in S 1420 is similar to the first terminal device in S920. For a process performed by the fourth terminal device in S 1420, refer to the process performed by the first terminal device in S920. To avoid repetition, details are not described.

Optionally, a seventh terminal device and a ninth terminal device may be a same terminal device, or an eighth terminal device and a tenth terminal device may be a same terminal device. In other words, for ease of description, different terminal devices are used. Actually, a case in which two terminal devices in these terminal devices are a same terminal device may exist.

Optionally, the sum of the energy of the sampling points mentioned in the embodiments in FIG. 12 to FIG. 14 may be a sum of normalized energy of sampling points. To be specific, the fourth terminal device needs to perform normalization processing when calculating a sum of energy of sampling points of the first reference signal. The fourth terminal device may perform an inner product by using a sequence of sampling points of the received second signal and a sequence of the local first reference signal corresponding to the second signal, and then divide an inner product by an inner product of the sequence of the local first reference signal corresponding to the second signal and the sequence (the sequence of the local first reference signal corresponding to the second signal).

In the embodiments in FIG. 12 to FIG. 14, training the transmission beam of the third terminal device is described. Embodiments of this application are also applicable to training a receive beam of the fourth terminal device. In a process in which the receive beam of the fourth terminal device is trained, the third terminal device sends the first reference signal by using a fixed beam, and the fourth terminal device switches a beam to receive the first reference signal. The $i^{th}$ sampling points that are in the M*L sampling points corresponding to the M time domain periodicities of the first reference signal and that are sent by the third terminal device have a quasi-colocation relationship. In this way, the fourth terminal device measures energy of the first reference signal, and determines a second target beam in the receive beam based on the energy of the first reference signal. To avoid repetition, a process of determining the second target beam is not described in detail in embodiments of this application.

The foregoing describes the method embodiments provided in this application, and the following describes apparatus embodiments provided in this application. It should be understood that descriptions of apparatus embodiments correspond to the descriptions of the method embodiments. Therefore, for content that is not described in detail, refer to the method embodiments. For brevity, details are not described herein again.

FIG. 15 shows a communication apparatus 1500 according to an embodiment of this application. The communication apparatus 1500 includes a processor 1510 and a transceiver 1520. The processor 1510 and the transceiver 1520 communicate with each other through an internal connection path. The processor 1510 is configured to execute instructions, to control the transceiver 1520 to send a signal and/or receive a signal.

Optionally, the communication apparatus 1500 may further include a memory 1530. The memory 1530 communicates with the processor 1510 and the transceiver 1520 through internal connection paths. The memory 1530 is configured to store the instructions. The processor 1510 may execute the instructions stored in the memory 1530. In a possible implementation, the communication apparatus 1500 is configured to implement procedures and operations corresponding to the first device, the network device, or the third terminal device in the foregoing method embodiments. In a possible implementation, the communication apparatus 1500 is configured to implement procedures and operations corresponding to the second device, the first terminal device, or the fourth terminal device in the foregoing method embodiments. In a possible implementation, the communication apparatus 1500 is configured to implement procedures and operations corresponding to the third device, the second terminal device, or the seventh terminal device in the foregoing method embodiments.

It should be understood that the communication apparatus 1500 may be specifically the first device, the network device, the third terminal device, the second device, the first terminal device, the fourth terminal device, the third device, the second terminal device, or the seventh terminal device in the foregoing embodiments, or may be a chip or a chip system. Correspondingly, the transceiver 1520 may be a transceiver circuit of the chip. This is not limited herein. Specifically, the communication apparatus 1500 may be configured to perform operations and/or procedures corresponding to the first device, the network device, the third terminal device, the second device, the first terminal device, the fourth terminal device, the third device, the second terminal device, or the seventh terminal device in the foregoing method embodiments. Optionally, the memory 1530 may include a read-only memory and a random access memory, and provide the instructions and data for the processor. A part of the memory may further include a non-volatile random access memory. For example, the memory may further store information about a device type. The processor 1510 may be configured to execute the instructions stored in the memory. In addition, when executing the instructions stored in the memory, the processor 1510 is configured to perform operations and/or procedures corresponding to the first device, the network device, the third terminal device, the second device, the first terminal device, the fourth terminal device, the third device, the second terminal device, or the seventh terminal device in the foregoing method embodiments.

In an implementation process, operations in the foregoing methods can be completed by using a hardware integrated logical circuit in the processor, or by using instructions in a form of software. The operations in the methods disclosed with reference to embodiments of this application may be directly performed and completed by a hardware processor, or may be performed and completed by using a combination of hardware in the processor and a software module. The software module may be located in a mature storage medium in the art, such as the random access memory, a flash memory, the read-only memory, a programmable read-only memory, an electrically erasable programmable memory, or a register. The storage medium is located in the memory. The processor reads information in the memory and completes the operations in the foregoing methods in combination with the hardware of the processor. To avoid repetition, details are not described herein again.

It should be noted that the processor in embodiments of this application may be an integrated circuit chip, and has a signal processing capability. In an implementation process, the operations in the foregoing method embodiments can be completed by using the hardware integrated logical circuit in the processor, or by using the instructions in the form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the operations, and logical block diagrams that are disclosed in embodiments of this application. The general-purpose processor may be a microprocessor, any conventional processor, or the like. The operations in the methods disclosed with reference to embodiments of this application may be directly performed and completed by a hardware decoding processor, or may be performed and completed by using a combination of hardware in a decoding processor and a software module. The software module may be located in a mature storage medium in the art, such as the random access memory, a flash memory, the read-only memory, a programmable read-only memory, an electrically erasable programmable memory, or a register. The storage medium is located in the memory. The processor reads information in the memory and completes the operations in the foregoing methods in combination with the hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and the methods described in this specification includes but is not limited to these memories and any memory of another proper type.

According to the methods provided in embodiments of this application, this application further provides a computer program product. The computer program product includes computer program code. When the computer program code is run on a computer, the computer is enabled to perform operations or procedures performed by the first device, the network device, the third terminal device, the second device, the first terminal device, the fourth terminal device, the third device, the second terminal device, or the seventh terminal device in the foregoing method embodiments.

According to the methods provided in embodiments of this application, this application further provides a computer-readable storage medium. The computer-readable storage medium stores program code. When the program code is run on a computer, the computer is enabled to perform operations or procedures performed by the first device, the network device, the third terminal device, the second device, the first terminal device, the fourth terminal device, the third device, the second terminal device, or the seventh terminal device in the foregoing method embodiments.

According to the methods provided in embodiments of this application, this application further provides a communication system. The communication system includes the foregoing one or more first devices, and one or more second devices, or includes the foregoing one or more first devices, one or more second devices, and one or more third devices.

Descriptions of the foregoing apparatus embodiments completely correspond to descriptions of the foregoing method embodiments. A corresponding module or unit performs a corresponding operation. For example, a communication unit (a transceiver) performs a receiving operation or a sending operation in the method embodiments, and a processing unit (a processor) may perform an operation other than the sending operation or the receiving operation. A function of a specific unit may be based on a corresponding method embodiment. There may be one or more processors.

In embodiments of this application, the terms and the English abbreviations are all examples given for ease of description, and should not constitute any limitation on this application. This application does not exclude a possibility of defining another term that can implement a same or similar function in an existing or future protocol.

It should be understood that "and/or" in this specification describes an association relationship between associated objects, and represents that three relationships may exist. For example, A and/or B may represent the following cases: A exists alone, both A and B exist, and B exists alone, where A and B may be singular or plural. The character "/" generally represents an "or" relationship between the associated objects.

A person of ordinary skill in the art may be aware that the illustrative logical blocks (illustrative logical block) and the operations described with reference to embodiments disclosed in this specification may be implemented by electronic hardware or a combination of computer software and electronic hardware. Whether the functions are performed by using hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatuses, and units, refer to a corresponding process in the foregoing method embodiments, and details are not described herein again.

In several embodiments provided in this application, it should be understood that the disclosed system, apparatuses, and methods may be implemented in other manners. For example, the described apparatus embodiments are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

In the foregoing embodiments, all or a part of the functions of the functional units may be implemented by using software, hardware, firmware, or any combination thereof. When the software is used to implement embodiments, all or a part of embodiments may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state disk, SSD)), or the like.

When the functions are implemented in the form of a software functional unit and sold or used as an independent product, the functions may be stored in a computer-readable storage medium. Based on such an understanding, the technical solutions of this application essentially, or a part contributing to the conventional technology, or a part of the technical solutions may be embodied in a form of a software product. The computer software product is stored in a storage medium, and includes several instructions for enabling a computer device (which may be a personal computer, a server, a network device, or the like) to perform all or a part of the operations of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.    A signal processing method, wherein the method is applicable to a first device, and comprises:

    determining P resource elements in L resource elements, wherein a quantity of resource elements between any two of the L resource elements is an integer multiple of M, the L resource elements are located in a frequency domain resource corresponding to a first time domain symbol, the L resource elements span frequency domain resources of at least two devices, and the P resource elements belong to a frequency domain resource of a second device; and

    mapping, on the P resource elements, a first reference signal to be sent to the second device, wherein a resource element other than the P resource elements in the L resource elements belongs to a frequency domain resource of another device, no signal is sent on the resource element other than the P resource elements in the L resource elements, and the at least two devices comprise the second device and the another device, wherein

    M, L, and P are positive integers, and L is greater than or equal to P.

2.    The method according to claim 1, wherein the method further comprises:

    sending M*L sampling points corresponding to M time domain periodicities of the first reference signal to the second device on the first time domain symbol, wherein each of the M time domain periodicities of the first reference signal corresponds to L sampling points, $i^{th}$ sampling points in the M*L sampling points corresponding to the M time domain periodicities of the first reference signal have a quasi-colocation relationship, and a value of i is a positive integer ranging from 1 to L; and the first device sending a first signal to a third device, wherein M time domain periodicities of the first signal correspond to M*L sampling points, each of the M time domain periodicities of the first signal corresponds to L sampling points, and the another device comprises the third device, wherein a sequence of the $i^{th}$ sampling points in the M*L sampling points corresponding to the M time domain periodicities of the first reference signal is orthogonal to a sequence of $i^{th}$ sampling points in the M*L sampling points corresponding to the M time domain periodicities of the first signal, wherein M and L are positive integers.

3.    The method according to claim 2, wherein the $i^{th}$ sampling point and a $j^{th}$ sampling point in the L sampling points corresponding to each time domain periodicity of the first reference signal have a quasi-colocation relationship, wherein a value of j is a positive integer ranging from 1 to L, and i is not equal to j.

4.    The method according to claim 2 or 3, wherein the method further comprises:

    sending configuration information to the second device, wherein the configuration information indicates the second device to measure Q sampling points in the L sampling points corresponding to each time domain periodicity of the first reference signal, wherein

Q is a positive integer less than or equal to L.

5. The method according to claim 4, wherein the configuration information comprises L bits, and the L bits comprised in the configuration information are in one-to-one correspondence with the L sampling points corresponding to each time domain periodicity of the first reference signal, wherein when a value of each of Q bits in the L bits comprised in the configuration information is a first value, it indicates that the second device measures the Q sampling points that are in each time domain periodicity of the first reference signal and that are in one-to-one correspondence with the Q bits; and when a value of each of (L-Q) bits other than the Q bits in the L bits comprised in the configuration information is a second value, it indicates that the second device does not measure (L-Q) sampling points that are in each time domain periodicity of the first reference signal and that are in one-to-one correspondence with the (L-Q) bits.

6. The method according to claim 5, wherein the method further comprises:
receiving first measurement information corresponding to the first time domain symbol from the second device, wherein the first measurement information comprises L bits, and the L bits comprised in the first measurement information are in one-to-one correspondence with the L sampling points corresponding to each time domain periodicity of the first reference signal, wherein when a value of a first bit in the L bits comprised in the first measurement information is a third value, it indicates that a sum of energy of sampling points that are in the M time domain periodicities of the first reference signal and that meet a quasi-colocation relationship with a sampling point corresponding to the first bit is greater than a preset value; and when a value of a second bit in the L bits is a fourth value, it indicates that a sum of energy of sampling points that are in the M time domain periodicities of the first reference signal and that meet a quasi-colocation relationship with a sampling point corresponding to the second bit is less than or equal to the preset value, or indicates that the second device does not measure a sampling point that is in each time domain periodicity of the first reference signal and that corresponds to the second bit.

7. The method according to claim 4, wherein the configuration information comprises Q indexes, and the Q indexes are in one-to-one correspondence with the Q sampling points.

8. The method according to claim 7, wherein the method further comprises:
receiving second measurement information corresponding to the first time domain symbol from the second device, wherein the second measurement information indicates a target index, the Q indexes comprise the target index, and a sum of energy of sampling points that are in the M time domain periodicities and that meet a quasi-colocation relationship with a sampling point corresponding to the target index is greater than a preset value.

9. The method according to claim 5 or 7, wherein the method further comprises:
receiving third measurement information corresponding to the first time domain symbol from the second device, wherein the third measurement information comprises a sum of energy of sampling points that are in the M time domain periodicities of the first reference signal and that meet a quasi-colocation relationship.

10. The method according to any one of claims 2 to 9, wherein the method further comprises:
sending first indication information to the second device, wherein the first indication information indicates that the $i^{th}$ sampling points in the M*L sampling points corresponding to the M time domain periodicities of the first reference signal sent on the first time domain symbol have the quasi-colocation relationship.

11. The method according to any one of claims 1 to 10, wherein the method further comprises:
sending second indication information to the second device, wherein the second indication information indicates the first time domain symbol.

12. The method according to any one of claims 1 to 11, wherein the another device is the third device, and the method further comprises:
sending third indication information, wherein the third indication information indicates the first time domain symbol.

13. The method according to claim 12, wherein the method further comprises:
sending fourth indication information, wherein the fourth indication information indicates a first comb value M and a first comb offset value that correspond to the L resource elements, and the first comb offset value ranges from 0 to (M-1).

14. The method according to claim 12 or 13, wherein the method further comprises:
sending fifth indication information to the third device, wherein the fifth indication information indicates that no signal is mapped on the resource element other than the P resource elements in the L resource elements or that punctuation is performed on the resource element other than the P resource elements in the L resource elements.

15. The method according to any one of claims 1 to 14, wherein the method further comprises:

receiving sixth indication information broadcast by a fourth device, wherein the sixth indication information indicates the first time domain symbol; and
receiving seventh indication information broadcast by the fourth device, wherein the seventh indication information indicates the fourth device to send, on the first time domain symbol, a second comb value K and a second comb offset value that correspond to a resource element of a second reference signal, wherein K is a positive integer, and the second comb offset value ranges from 0 to (K-1).

16. The method according to claim 15, wherein the method further comprises:

determining W resource elements based on the first time domain symbol indicated by the sixth indication information and the second comb value K and the second comb offset value that are indicated by the seventh indication information, wherein the W resource elements span the frequency domain resources of the at least two devices, and a quantity of resource elements between any two of the W resource elements is an integer multiple of K, wherein W is a positive integer; and
the determining P resource elements in L resource elements comprises:
filtering out, from a frequency domain resource of the first device, a resource element that belongs to the W resource elements, to determine the P resource elements in the L resource elements.

17. A signal processing method, wherein the method is applicable to a second device, and comprises:

receiving M*L sampling points corresponding to M time domain periodicities of a second signal on a first time domain symbol, wherein each of the M time domain periodicities of the second signal corresponds to L sampling points; and
determining energy of a first reference signal in the second signal based on an inner product of a first sequence and a second sequence, wherein the first sequence comprises a sequence of $i^{th}$ sampling points in the M*L sampling points corresponding to the M time domain periodicities of the second signal, and the second sequence comprises a sequence of $i^{th}$ sampling points in M*L sampling points in M time domain periodicities of the local first reference signal, wherein
M and L are positive integers, and a value of i is a positive integer ranging from 1 to L.

18. The method according to claim 17, wherein the first sequence further comprises a sequence of $j^{th}$ sampling points in the M*L sampling points corresponding to the M time domain periodicities of the second signal, and the second sequence further comprises a sequence of $j^{th}$ sampling points in the M*L sampling points in the M time domain periodicities of the local first reference signal, wherein a value of j is a positive integer ranging from 1 to L, and i is not equal to j.

19. The method according to claim 17 or 18, wherein the method further comprises:
receiving configuration information from a first device, wherein the configuration information indicates the second device to measure Q sampling points in the L sampling points corresponding to each time domain periodicity of the second signal, and the Q sampling points comprise the $i^{th}$ sampling point in the L sampling points corresponding to each time domain periodicity of the second signal.

20. The method according to claim 19, wherein the configuration information comprises L bits, and the L bits comprised in the configuration information are in one-to-one correspondence with the L sampling points corresponding to each time domain periodicity of the second signal, wherein when a value of each of Q bits in the L bits comprised in the configuration information is a first value, it indicates that the second device measures the Q sampling points that are in each time domain periodicity of the second signal and that are in one-to-one correspondence with the Q bits; and when a value of each of (L-Q) bits other than the Q bits in the L bits is a second value, it indicates that the second device does not measure (L-Q) sampling points that are in each time domain periodicity of the second signal and that are in one-to-one correspondence with the (L-Q) bits.

21. The method according to claim 20, wherein after the determining energy of a first reference signal in the second signal based on an inner product of a first sequence and a second sequence, the method further comprises:

sending first measurement information corresponding to the first time domain symbol to the first device, wherein the first measurement information comprises L bits, and the L bits comprised in the first measurement information are in one-to-one correspondence with the L sampling points corresponding to each time domain periodicity of the second signal, wherein when a value of a first bit in the L bits comprised in the first measurement information is a third value, it indicates that a sum of energy of sampling points that are in the M time domain periodicities of the first reference signal in the second signal and that meet a quasi-colocation relationship with a sampling point corresponding to the first bit is greater than a preset value; and when a value of a second bit in the L bits is a fourth value, it indicates that a sum of energy of sampling points that are in the M time domain periodicities of the first reference signal in the second signal and that meet a quasi-colocation relationship with a sampling point corresponding to the second bit is less than or equal to the preset value, or indicates that the second device does not measure a sampling point that is in each time domain periodicity of the first reference signal in the second signal and that corresponds to the second bit.

22. The method according to claim 19, wherein the configuration information comprises Q indexes, and the Q indexes are in one-to-one correspondence with the Q sampling points.

23. The method according to claim 22, wherein after the determining energy of a first reference signal in the second signal based on an inner product of a first sequence and a second sequence, the method further comprises:
sending second measurement information corresponding to the first time domain symbol to the first device, wherein the second measurement information indicates a target index, the Q indexes comprise the target index, and a sum of energy of sampling points that are in the M time domain periodicities of the first reference signal in the second signal and that meet a quasi-colocation relationship with a sampling point corresponding to the target index is greater than a preset value.

24. The method according to claim 20 or 22, wherein the method further comprises:
sending third measurement information corresponding to the first time domain symbol to the first device, wherein the third measurement information comprises a sum of energy of sampling points that meet a quasi-colocation relationship.

25. The method according to any one of claims 17 to 24, wherein the method further comprises:
receiving first indication information from the first device, wherein the first indication information indicates that the $i^{th}$ sampling points in the M*L sampling points corresponding to the M time domain periodicities of the first reference signal that is in the second signal and that is sent on the first time domain symbol have the quasi-colocation relationship.

26. The method according to any one of claims 17 to 25, wherein the method further comprises:
receiving second indication information from the first device, wherein the second indication information indicates the first time domain symbol.

27. A communication apparatus, comprising a processor, wherein the processor is coupled to a memory, and the processor is configured to execute a computer program or instructions stored in the memory, to enable the communication apparatus to implement the method according to any one of claims 1 to 26.

28. A computer-readable storage medium, wherein the computer-readable storage medium stores computer instructions, and when the computer instructions are run on an electronic device, the electronic device is enabled to perform the method according to any one of claims 1 to 26.

Network device 120

Terminal device 110

FIG. 1

M

Reference signal

M          M          M          M

L*M

FIG. 2

FIG. 3

FIG. 4

<u>500</u>

| A network device determines P REs in L REs, where a quantity of REs between any two of the L REs is an integer multiple of M, the L REs are located in a frequency domain resource corresponding to a first time domain symbol, the L REs span frequency domain resources of at least two devices, and the P REs belong to a frequency domain resource of a first terminal device, where M, L, and P are positive integers, and L is greater than or equal to P | S510 |

| The network device maps, on the P REs, a first reference signal to be sent to the first terminal device, where an RE other than the P REs in the L REs belongs to a frequency domain resource of another terminal device, no signal is sent on the RE other than the P REs in the L REs, and the at least two devices include the first terminal device and the another terminal device | S520 |

FIG. 5

FIG. 6

700

A network device sends M\*L sampling points corresponding to M time domain periodicities of a first reference signal to a first terminal device on a first time domain symbol, where each of the M time domain periodicities of the reference signal corresponds to L sampling points, i$^{th}$ sampling points in the M\*L sampling points corresponding to the M time domain periodicities have a quasi-colocation relationship, and a value of i ranges between a part of positive integers of 1 to L — S710

The network device sends a first signal to a second terminal device on the first time domain symbol, where M time domain periodicities of the first signal correspond to M\*L sampling points, each of the M time domain periodicities of the first signal corresponds to L sampling points, and another terminal device includes the second terminal device — S720

FIG. 7

Beam 1  Beam 2

| 1 | 1 | 0 | 0 | 1 | 1 | 0 | 0 | ...

1$^{st}$ time domain periodicity

L

2$^{nd}$ time domain periodicity

L

M$^{th}$ time domain periodicity

FIG. 8

900

A first terminal device receives M*L sampling points corresponding to M time domain periodicities of a second signal from a first device on a first time domain symbol, where each of the M time domain periodicities of the second signal corresponds to L sampling points ⎯ S910

The first terminal device determines energy of a first reference signal in the second signal based on an inner product of a first sequence and a second sequence, where the first sequence includes a sequence of $i^{th}$ sampling points in the M*L sampling points corresponding to the M time domain periodicities of the second signal, the second sequence includes a sequence of $i^{th}$ sampling points in M*L sampling points in M time domain periodicities of the local reference signal of the first terminal device, and a value of i ranges between a part of positive integers of 1 to L ⎯ S920

FIG. 9

FIG. 10

FIG. 11

1200

A fifth terminal device broadcasts sixth indication information, and a third terminal device receives the sixth indication information, where the sixth indication information indicates a first time domain symbol — S1210

The fifth terminal device broadcasts seventh indication information, and the third terminal device receives the seventh indication information, where the seventh indication information indicates the fifth terminal device to send, on the first time domain symbol, a second comb value K and a second comb offset value that correspond to a resource element of a second reference signal, where K is a positive integer, and the second comb offset value ranges from 0 to (K–1) — S1220

The third terminal device determines W REs based on the first time domain symbol indicated by the sixth indication information and the second comb value K and the second comb offset value that are indicated by the seventh indication information, where the W REs span frequency domain resources of at least two devices, and a quantity of REs between any two of the W REs is an integer multiple of K; and filters out, from a frequency domain resource of the third terminal device, an RE that belongs to the W REs, to determine P REs in L REs — S1230

The third terminal device maps, on the P REs, a first reference signal to be sent to a fourth terminal device, where the P REs are located on a frequency band of the third terminal device, an RE other than the P REs in the L REs belongs to a frequency domain resource of another terminal device, and the another terminal device sends no signal on the RE other than the P REs in the L REs — S1240

FIG. 12

First signal

Second reference signal mapped by a fifth terminal device

First reference signal mapped by a third terminal device

RE 1  M        RE 2 RE 4    M  RE 3 RE 5        RE L  RE 6

⌐ M        ⌐ M        ⌐ M                ⌐ M
1st frequency      2nd frequency      3rd frequency      Lth frequency
domain raster      domain raster      domain raster      domain raster

FIG. 13

1400

| A fourth terminal device receives M*L sampling points corresponding to M time domain periodicities of a second signal on a first time domain symbol, where each of the M time domain periodicities of the second signal corresponds to L sampling points | S1410 |

| The fourth terminal device determines energy of a first reference signal in the second signal based on an inner product of a first sequence and a second sequence, where the first sequence includes a sequence of $i^{th}$ sampling points in the M*L sampling points corresponding to the M time domain periodicities of the second signal, and the second sequence includes $i^{th}$ sampling points in M*L sampling points in M time domain periodicities of the local first reference signal of the fourth terminal device | S1420 |

FIG. 14

Communication apparatus 1500

Processor
1510

Memory
1530

Transceiver
1520

FIG. 15

## INTERNATIONAL SEARCH REPORT

| | International application No. |
| --- | --- |
| | **PCT/CN2023/083086** |

### A. CLASSIFICATION OF SUBJECT MATTER

H04B7/06(2006.01)i; H04B7/08(2006.01)i; H04B7/0408(2017.01)i; H04L5/00(2006.01)i

According to International Patent Classification (IPC) or to both national classification and IPC

### B. FIELDS SEARCHED

Minimum documentation searched (classification system followed by classification symbols)

H04B; H04L; H04W

Documentation searched other than minimum documentation to the extent that such documents are included in the fields searched

Electronic data base consulted during the international search (name of data base and, where practicable, search terms used)

CNTXT, ENTXT, ENTXTC, VEN, 3GPP: 波束, 训练, 间距, 间隔, 梳, 梳齿, 梳状, 频域, 时域, beam, train+, comb+, interval +, frequen+, time+

### C. DOCUMENTS CONSIDERED TO BE RELEVANT

| Category* | Citation of document, with indication, where appropriate, of the relevant passages | Relevant to claim No. |
| --- | --- | --- |
| A | CN 110401470 A (HUAWEI TECHNOLOGIES CO., LTD.) 01 November 2019 (2019-11-01) description, paragraphs [0062]-[0139], and figures 1-14 | 1-28 |
| A | CN 108476188 A (SAMSUNG ELECTRONICS CO., LTD.) 31 August 2018 (2018-08-31) entire document | 1-28 |
| A | CN 110771105 A (NOKIA TECHNOLOGIES OY) 07 February 2020 (2020-02-07) entire document | 1-28 |
| A | CN 112713974 A (CHENGDU HUAWEI TECHNOLOGIES CO., LTD.) 27 April 2021 (2021-04-27) entire document | 1-28 |
| A | CN 113517914 A (HUAWEI TECHNOLOGIES CO., LTD.) 19 October 2021 (2021-10-19) entire document | 1-28 |
| A | US 2017033851 A1 (ZTE CORP.) 02 February 2017 (2017-02-02) entire document | 1-28 |
| A | US 2019363777 A1 (NOKIA TECHNOLOGIES OY) 28 November 2019 (2019-11-28) entire document | 1-28 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 May 2023** | **13 June 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/083086**

**C.    DOCUMENTS CONSIDERED TO BE RELEVANT**

| Category* | Citation of document, with indication, where appropriate, of the relevant passages | Relevant to claim No. |
|---|---|---|
| A | WO 2020222621 A1 (LG ELECTRONICS INC.) 05 November 2020 (2020-11-05)<br>entire document | 1-28 |
| A | NOKIA et al. "R1-1711304 On CSI-RS Design for DL Beam Management"<br>*3GPP TSG-RAN WG1 NR Ad-Hoc#2*, 16 June 2017 (2017-06-16),<br>entire document | 1-28 |

Form PCT/ISA/210 (second sheet) (July 2022)

# EP 4 489 324 A1

**INTERNATIONAL SEARCH REPORT**
Information on patent family members

International application No.

**PCT/CN2023/083086**

| Patent document cited in search report | | | Publication date (day/month/year) | Patent family member(s) | | | Publication date (day/month/year) |
|---|---|---|---|---|---|---|---|
| CN | 110401470 | A | 01 November 2019 | US | 2020067674 | A1 | 27 February 2020 |
| | | | | US | 11374716 | B2 | 28 June 2022 |
| | | | | WO | 2019096195 | A1 | 23 May 2019 |
| | | | | CN | 109802818 | A | 24 May 2019 |
| | | | | CN | 110401471 | A | 01 November 2019 |
| | | | | EP | 3605935 | A1 | 05 February 2020 |
| | | | | EP | 3605935 | A4 | 27 May 2020 |
| | | | | IN | 202047022646 | A | 26 June 2020 |
| | | | | CN | 10401470 | B | 07 July 2020 |
| | | | | CN | 10401471 | B | 07 July 2020 |
| | | | | VN | 72212 | A | 25 August 2020 |
| | | | | CN | 109802818 | B | 10 May 2022 |
| | | | | EP | 3605935 | B1 | 22 June 2022 |
| | | | | US | 11374716 | B2 | 28 June 2022 |
| | | | | US | 2022353028 | A1 | 03 November 2022 |
| | | | | EP | 4117216 | A1 | 11 January 2023 |
| CN | 108476188 | A | 31 August 2018 | EP | 3343859 | A1 | 04 July 2018 |
| | | | | EP | 3343859 | A4 | 10 October 2018 |
| | | | | EP | 3343859 | B1 | 12 February 2020 |
| | | | | KR | 20180064543 | A | 14 June 2018 |
| | | | | US | 2019058558 | A1 | 21 February 2019 |
| | | | | US | 10484152 | B2 | 19 November 2019 |
| | | | | WO | 2017078413 | A1 | 11 May 2017 |
| | | | | IN | 201837013765 | A | 18 May 2018 |
| CN | 110771105 | A | 07 February 2020 | WO | 2018199984 | A1 | 01 November 2018 |
| | | | | US | 2020169440 | A1 | 28 May 2020 |
| | | | | US | 10917278 | B2 | 09 February 2021 |
| | | | | EP | 3616375 | A1 | 04 March 2020 |
| | | | | CN | 110771105 | B | 01 November 2022 |
| CN | 112713974 | A | 27 April 2021 | None | | | |
| CN | 113517914 | A | 19 October 2021 | WO | 2021204253 | A1 | 14 October 2021 |
| | | | | EP | 4120583 | A1 | 18 January 2023 |
| US | 2017033851 | A1 | 02 February 2017 | US | 9906284 | B2 | 27 February 2018 |
| | | | | WO | 2014187322 | A1 | 27 November 2014 |
| | | | | CN | 104734759 | A | 24 June 2015 |
| | | | | CN | 104734759 | B | 03 December 2019 |
| US | 2019363777 | A1 | 28 November 2019 | WO | 2018065662 | A1 | 12 April 2018 |
| | | | | BR | 112019006750 | A2 | 25 June 2019 |
| | | | | KR | 20190059316 | A | 30 May 2019 |
| | | | | KR | 102192238 | B1 | 18 December 2020 |
| | | | | JP | 2019532551 | A | 07 November 2019 |
| | | | | JP | 6810250 | B2 | 06 January 2021 |
| | | | | US | 10862563 | B2 | 08 December 2020 |
| | | | | EP | 3520228 | A1 | 07 August 2019 |
| | | | | EP | 3520228 | A4 | 27 May 2020 |
| WO | 2020222621 | A1 | 05 November 2020 | KR | 20210153737 | A | 17 December 2021 |
| | | | | CN | 114008945 | A | 01 February 2022 |
| | | | | EP | 3965346 | A1 | 09 March 2022 |
| | | | | EP | 3965346 | A4 | 27 July 2022 |

Form PCT/ISA/210 (patent family annex) (July 2022)

<table>
<tr><td colspan="4"><strong>INTERNATIONAL SEARCH REPORT</strong><br><strong>Information on patent family members</strong></td><td>International application No.<br><strong>PCT/CN2023/083086</strong></td></tr>
</table>

| Patent document cited in search report | Publication date (day/month/year) | Patent family member(s) | | Publication date (day/month/year) |
|---|---|---|---|---|
| | | US 2022236366 A1 | | 28 July 2022 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210303709

- CN 202210806902